# EUROPEAN PATENT SPECIFICATION

(11) **EP 0 564 220 B1**
(45) Date of publication and mention of the grant of the patent: **22.07.1998**
(21) Application number: 93302450.7
(22) Date of filing: 30.03.1993
(51) Int. Cl.: G04G 7/02

(54) **Clock synchronization system**
Synchronisiervorrichtung für Uhren
Dispositif de synchronisation pour montres

(30) Priority: 31.03.1992 US 861248
(43) Date of publication of application: 06.10.1993
(73) Proprietor: GLENAYRE ELECTRONICS, INC., Charlotte, North Carolina 28209 (US)
(72) Inventor: Witsaman, Mark L., Quincy, Illinois (US); Glessner, David W., Quincy, Illinois (US); Benz, Roger E., Quincy, Illinois (US); Crowley-Dierks, Joel R., Quincy, Illinois (US)
(74) Representative: Spall, Christopher John

(56) References cited:
- EP-A- 0 459 039
- US-A- 3 798 650
- US-A- 4 582 434
- US-A- 4 947 382

## Description

### Field of the Invention

This invention relates generally to systems for synchronizing a number of timers, or clocks, so that each indicates exactly the same time, to a clock that can be sychronized to the time maintained by a reference clock that transmits a reference signal, to a clock network and a broadcast network and, more particularly, to a system for synchronizing a set of clocks that are spaced over a wide geographic area.

### Background of the Invention

Many modern communications and measuring systems are assembled from a number of smaller subsystems or stations that are geographically spaced from each other and that are arranged to work together. One such system is a paging system that typically comprises a paging terminal, a paging system controller, and a number of transmitter units, called paging stations, that are located over a wide geographic area. The paging terminal is connected to the publicly switched telephone network and receives incoming calls to the system subscribers. In response to a call, the paging terminal formulates a page for the subscriber and forwards the page to the stations through the paging system controller. The paging stations, upon receipt of the page, broadcast it over their transmitting equipment. The subscriber's pager, which is a small receiver, picks up the broadcasts and, by the actuation of a display or generation of an audio tone, notifies the subscriber that he/she has been paged. Other types of multistation systems are data acquisition systems that include a number of monitoring sites for measuring a particular parameter, such as wind or seismic motion. Moreover, telemetry systems, which are systems used to obtain data and forward it to distant locations, often are comprised of spaced-apart subsystems that are designed to act together.

For many multistation communications and measuring systems to function properly, each station must include a control clock, or timer, and all the clocks must be synchronized. In other words, each of the clocks must, at the same moment, indicate the same time. For example, one paging system is arranged so that the paging system controller collects a number of pages, bundles them together in a packet, and then forwards the packet to the paging stations along with an instruction indicating when the packet should be broadcast. The paging stations then broadcast the packet of pages at the time indicated in the instruction. As long as all the stations broadcast the packet at the exact same time, pagers carried by system subscribers who are in areas where pages from two or more stations can be received will essentially receive a single signal that the pagers' circuitry can readily process. However, if the pages are broadcast at different times, the pagers will receive multiple, overlapping signals that cannot be processed. As a result, when a subscriber carries a pager into one of these signal overlap zones, it becomes, in effect, useless. In order to avoid this undesirable result, it is desirable for all the paging stations to have clocks that indicate the same time so that each station transmits the same packet of pages at the same time.

To date, it has proved difficult to provide a set of spaced-apart locations, such as paging stations, with clocks that are all in synchronization. The individual stations can be provided with very accurate crystal-controlled clocks that are periodically synchronized to a common reference time. A disadvantage of this practice is that the high-accuracy crystal-controlled clocks are very expensive. Moreover, even if these clocks are provided, it is still necessary to provide some type of synchronization equipment at each clock site in order to ensure that all the clocks run at the same rate. Furthermore, it is typically necessary that the synchronization of these clocks be performed by a technician that visits the clock site. The expenses associated with having personnel make such visits often means that such synchronization occurs at a less than optimal frequency.

Other attempts at providing a multiclock synchronization system have involved providing a master unit that generates a continuous reference signal and a set of clock drive circuits that use the reference signal to regulate the advancement of the clock units associated therewith. Typically, the reference signal is some type of AC signal and the clock drive circuits employ phase-locked loop subcircuits to regulate the advancement of clock advance signals. A disadvantage of these systems is that it has proved difficult to continually forward a reference signal to the individual clock sites. Given the scarcity of unassigned radio frequencies, there are many locations where it is essentially impossible to establish a radio link for generating such a reference signal. In these locations it would be necessary to forward the signal by a land link, such as a conventional wire line or a fiber-optic transmission link. While such lines can readily be used to forward a reference signal, the cost of connecting them to many locations can be expensive. As the number of clock sites intended to be synchronized increases, the expense of providing such a hard wire link can grow to the point of being cost prohibitive. Moreover, many of these systems require that the individual stations receive the signal in a specific phase relationship to each other. When the signal is transmitted to the individual stations over the publicly switched telephone network, the carrier may, from time to time, modify the routing of the signal to the individual stations. The inherent change in signal propagation time to the individual stations results in the phase relationship of the signal received at the station to shift. This necessitates having to adjust the processing equipment at the station in order to ensure that the signal is processed in the appropriate phase relationship.

Still another disadvantage of many current clock synchronization systems is that they are not well suited for use at clock sites that the user wants to establish only on a temporary basis or for use with a portable clock. Owing to their sensitivity, crystal-controlled clocks must be recalibrated, their frequency reset, each time they are set up. Moreover, owing to their size and power requirements, they do not lend themselves to installation in a portable housing, such as an instrument truck. Clocks controlled by constant-reference signals have similar problems. These clocks cannot be moved unless there is some assurance that the clock drive circuits will always be able to receive the requisite reference signals. It has proved very difficult to continually provide these signals, either when the clock is moved from site to site or when the clock is actually in motion.

### Summary of the Invention

The present invention provides a clock according to claim 1 systems according to claims 13, 20 and 24, a clock network according to claim 27 and a broadcast system according to claim 32. The dependent claims describe particular embodiments of the invention.

This invention relates generally to a clock synchronization system for synchronizing a number of timers or clocks, so that at the same instant each indicates the same time. More particularly, this invention is directed to a clock synchronization system wherein each clock includes a counter that is driven, advanced, by a periodically generated clocking signal. Each clock further includes a time counter controller that sets the initial state, the initial time, of the counter and that also selectively generates the clocking signal to regulate the advancement of the time indicated by the counter. The time counter controller establishes the initial counter setting and controls the frequency of the clocking signal by referring to a reference time from an external source.

In some preferred embodiments of this invention, the individual time counter controllers compare their associated counter indications with reference time signals received directly from a reference clock. Once such signal source is a global positioning system satellite. These satellites transmit a very accurate time signal that can readily be received by large numbers of remote stations that are located over large geographic areas. It is also possible to compare the station clock times of one or more stations to the reference time maintained by a single maintenance operation point. In these versions of the invention, the actual time comparison takes place at the maintenance operation point. After the comparison takes place, processing circuitry at the maintenance operation point then informs the time counter controller of the difference between the reference time and the clock time. The time counter controller uses this information to reset the clock's initial state and the clocking signal. Regardless of the specific source, each reference time/clock time comparison is made with respect to a single reference signal. Consequently, all the clocks in the system will be in synchronization with each other.

The clock synchronization system of this invention provides a convenient means to ensure that one or more clocks are running in parallel with a remote reference timer. The individual clock units receive the reference signal through readily established radio links to ever-present reference clocks, the satellites and/or local maintenance operation points. Only a relatively few components are needed to provide the timing control circuit that both initializes the counter and controls the rate at which it advances. Thus, the minimal site hardware and signal linkage component requirements make it relatively economical to provide this synchronization system.

Still another advantage of this system is that additional clocks can be added without having to disrupt or adjust for the clocks already connected to the system. Furthermore, given that each clock site has only a few relatively small components, these components have relatively low power requirements, and reference time signals can almost always be received, the system of this invention is well suited to provide accurate clocks that can be readily moved from site to site and that can even be used to provide a synchronized time signal while in motion.

Moreover, the signals generated by the individual time counter controllers of this invention can be applied to the transmitters with which they are associated to serve as reference signals to establish the transmitters' carrier frequencies. In some preferred embodiments of the invention, the time counter controllers can be adjusted so that the signals generated by the individual controllers will be slightly offset from each other. This will cause the associated transmitters to broadcast pages or other signals at carrier frequencies that are slightly offset from each other. This difference in carrier frequencies prevents the development of static null regions where, due to precisely out of phase signals from multiple transmitters, a receiver may not pick up a single, processable signal. In these embodiments of the invention, the time counter controller is further set to periodically advance or decrement the counter to compensate for a clocking signal-triggered advancement of the counter that is either above or below the desired clocking rate.

In an alternative preferred embodiment of the invention, the counter is merely an elapsed-time counter. In this embodiment of the invention, the time counter controller maintains a counter offset value, which it adds to the time count from the counter to determine the actual time. Clocks of this embodiment of the invention are synchronized by both periodically adjusting the frequency of the clocking signal and by resetting the counter offset value.

### Brief Description of the Drawings

The foregoing aspects and many of the attendant advantages of this invention will become more readily appreciated as the same becomes better understood by reference to the following detailed description, when taken in conjunction with the accompanying drawings, wherein:
FIGURE 1 is a block diagram of a paging system incorporating a clock synchronization system of this invention;
FIGURE 2 is a block diagram of the clock synchronization system of this invention;
FIGURE 3 is a block diagram of a single clock that is part of the clock synchronization system of this invention;
FIGURE 4 is a flow chart of the process by which a clock of the synchronization system of this invention is synchronized;
FIGURE 5 is a flow chart of the process by which the clock synchronization system of this invention adjusts for any offset in the advancement signals used to control the advancement of the clocks of this invention;
FIGURE 6 is a block diagram illustrating the primary components of a maintenance operation point of the clock synchronization system of this invention;
FIGURE 7 illustrates the format of one type of time information command that may be sent to the maintenance operation point according to this invention; and
FIGURE 8 is a partial block diagram of an alternative clock that is part of the clock synchronization system of this invention.

### Detailed Description of the Preferred Embodiment

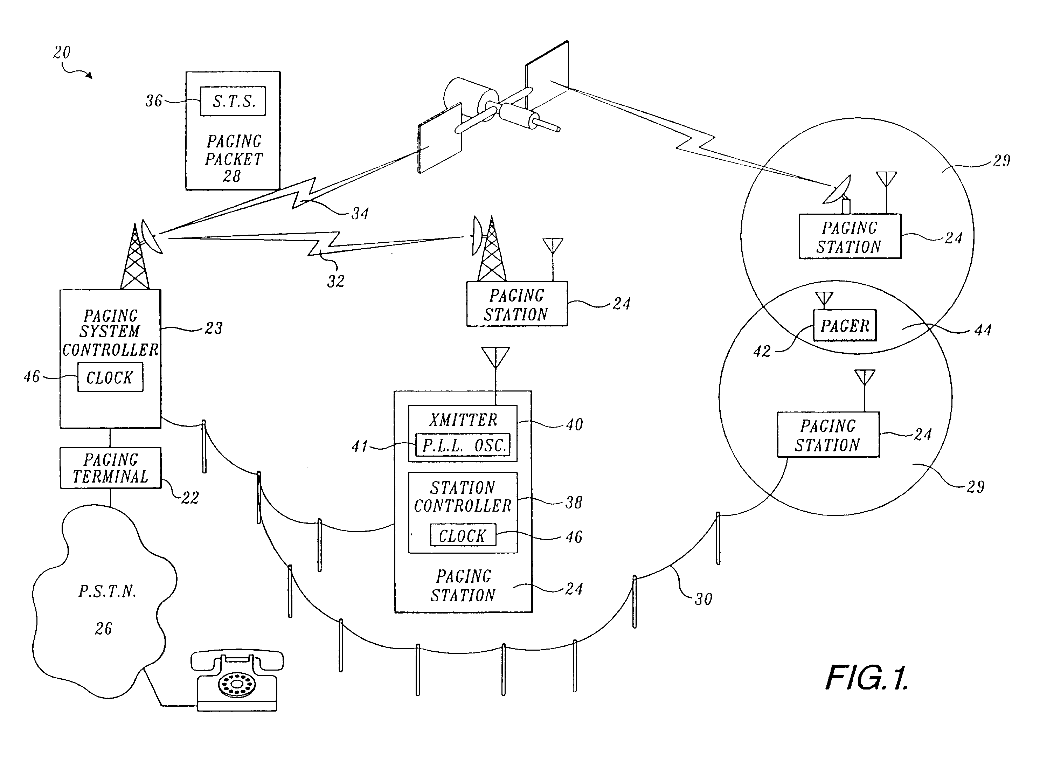

FIGURE 1 illustrates a paging system 20 incorporating the clock synchronization system of this invention. Paging system 20 includes a paging terminal 22, a paging system controller 23, and a number of paging stations 24 that are spread over a wide geographic area. The paging terminal 22 is connected to the publicly switched telephone network (PSTN) 26 for receiving incoming telephone calls that comprise requests to page individuals who subscribe to the paging system 20. In response to the incoming calls, the paging terminal 22 creates pages. The pages are transmitted by the paging terminal 22 to the paging system controller 23. The paging system controller 23 bundles the pages into multipage page data blocks (PDBs) 28 that are forwarded to the paging stations 24. The paging stations 24, in turn, each broadcast the pages over a specific geographic area, as represented by circles 29 for two stations.

The actual method by which PDBs 28 are forwarded to the paging stations 24 depends on such factors as the structure of the paging stations, the distance to the paging stations, and/or the economics of employing specific forwarding systems. For example, some PDBs 28 can be forwarded over a hard wire or fiber-optic telephone link 30. Other paging stations 24 can receive the packets 28 over a microwave link 32, while still others can receive them over a satellite link 34. Paging stations 24 may, of course, receive PDBs 28 over two or more communication links. In the event one link fails, the others could be employed to ensure that the PDBs 28 are received. Alternatively, the multiple links can be employed to simultaneously send multiple copies of each PDB 28 to the paging stations 24; this allows processing equipment at the individual stations to use the information from each of the PDBs to correct for any transmission errors.

Each paging station 24, one of which is shown in detail, contains a station controller 38 and a transmitter 40. The station controller 38 receives the PDBs 28 from the paging system controller 23 and converts the paging information contained therein into a format so that it can be modulated for broadcast by the transmitter 40. The individual station controllers 38 are further configured to control the transmission of the pages so that all the transmitters 40 broadcast the same page at exactly the same instant. This ensures that when a pager 42, which is a receiver, is in an area where broadcasts from two or more paging terminals can be picked up, as represented by the overlapping area 44 between circles 29, the pager will essentially receive a single signal that can be readily processed. The station controllers 38 control the transmission of the pages contained in the PDBs 28 by the individual transmitters 40 so as to cause each transmitter to broadcast the pages contained within a single, common, PDB 28 at the same time. To ensure that the pages are broadcast simultaneously, the station controllers are each provided with a clock 46 and all the clocks are in synchrony. In other words, at the same instant, each clock 46 indicates the same time.

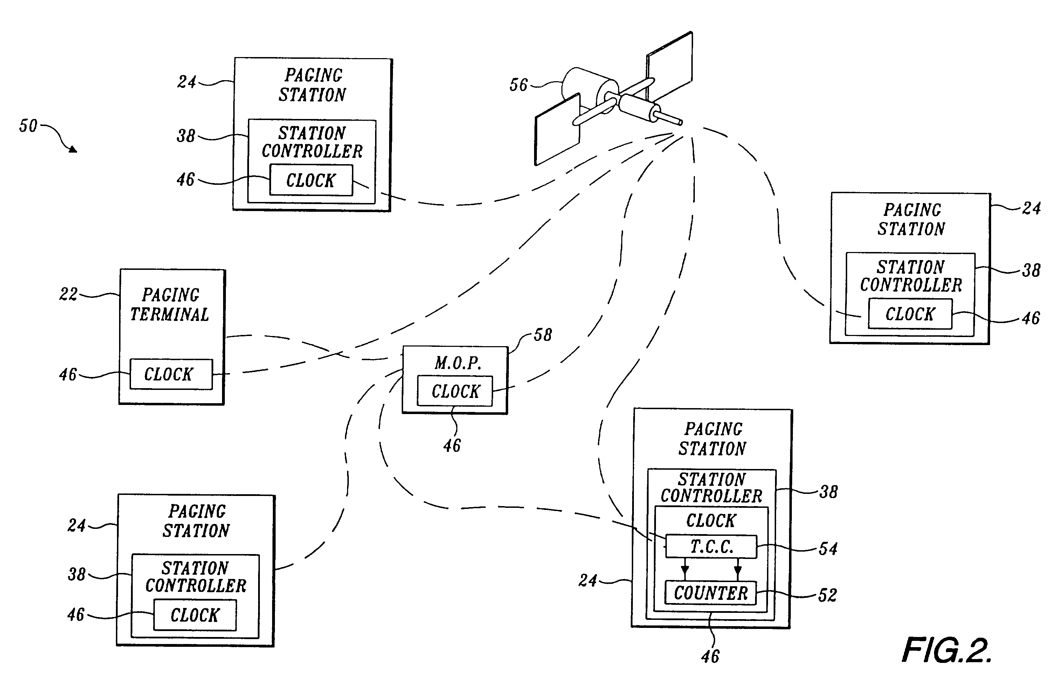

FIGURE 2 illustrates in block diagram the clock synchronization system 50 of this invention. The clocks 46 at each paging station 24, as well as a clock 46 at the paging system controller 23, each include a counter 52 and a time counter controller 54. The counter 52 is the actual unit that generates the local-time signal that the station controller 38 uses to regulate the broadcast of the pages. The time counter controller 54 establishes the initial setting, the initial time indicated by the counter 52, and periodically sends a clocking signal to the counter so that the counter always generates an accurate local-time signal. The time counter controller 54 synchronizes the counter 52 by first periodically comparing the counter's local-time signal to a reference-time signal from a reference clock. As a result of this comparison, the time counter controller 54 first resets the counter 52 so that, at the conclusion of the synchronization process, the counter initially generates the correct local-time signal. The time counter controller 54 also adjusts the rate at which the clocking signal is sent to counter 52 to ensure that the counter continues to indicate an accurate local-time signal.

In some preferred embodiments of the invention, the time counter controllers 54 receive reference-time signals from global positioning system (GPS) satellites 56. These satellites generate highly accurate time signals. These satellites 56 are arranged so that, at any point on the earth, a ground station, such as a time counter controller 54, can receive the signals from at least one satellite. In locations where it is too expensive or physically difficult to provide a time counter controller 54 with GPS satellite-receiving equipment, the reference time comparisons are made with respect to the time maintained by a ground-located maintenance operation point (MOP) 58. Each MOP 58 contains a clock 46 that is synchronized with respect to the basic reference clock, the GPS satellite 56. The local-time signals generated by one or more of the clocks 46 located at the paging stations 24 are compared to the reference time maintained by the MOP 58. In some versions of the system 50 it is anticipated that the actual local/reference time comparisons will take place at the MOP 58. After each comparison, the MOP 58 sends each time counter controller 54 a signal indicating a time difference factor between the two times. The time counter controller 54 then uses the time difference factor to determine the extent to which the counter 52 initial state needs to be reset and the extent to which the clocking signal needs to be adjusted. The system 50 can further be configured so that a time counter controller 54 can either receive a reference time from a GPS satellite 56 or resynchronize the associated counter with respect to the reference clock associated with a maintenance operation point 58.

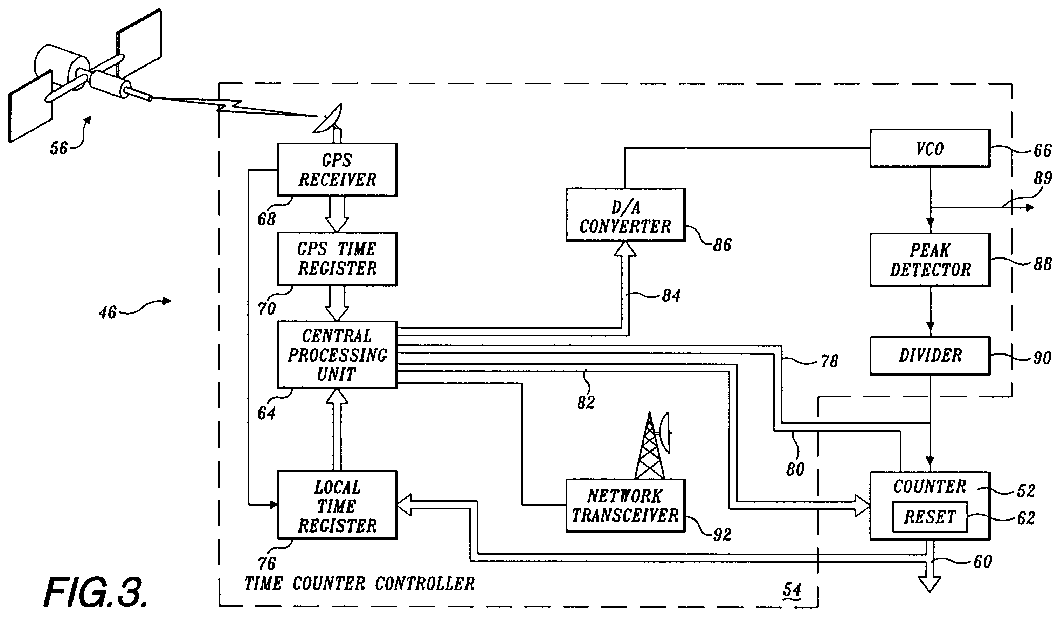

A clock 46 of this system 50 is described in greater detail with reference to FIGURE 3. The counter 52 is a 32-bit digital counter that is capable of advancing at a rate at least one order of magnitude faster than the designed accuracy rate of the clock. The counter 52 maintains a count in binary format, of the elapsed time in seconds, down to the microsecond (0.000001 second) since the start of a larger, preselected, fixed time period. In some versions of the system, the counter 52 is used to maintain an elapsed-time count for 60-minute periods that start on the beginning of the hour for an established reference-time standard. (The periods may start with the beginning of a new hour according to Greenwich Mean Time.) In other versions of the invention, the counter 52 is used to keep track of the elapsed time for periods that may, for example, be from 5 minutes to 80 minutes in length. The counter 52 generates an elapsed-time signal that is broadcast to other components of the station controller 38, not shown in this Figure, over a time bus 60. The station controller 38 components use the elapsed-time signals to regulate the advancement of their own internal counters that maintain a record of the period (i.e., the specific hour) for which counter 52 is recording the elapsed time. The station controller 38 combines the period count from its internal registers with the elapsed-time signal from the counter 52 to produce a combined hour and second clock signal that is accurate to one microsecond.

Associated with the counter 52 is a reset circuit 62. In FIGURE 3 the reset circuit is shown as being integral with the counter 52. The reset circuit 62 monitors the elapsed time and, at the conclusion of a measuring period, resets the counter to zero with the next advancement signal. For example, when clock 46 is used to measure 60-minute periods, once the counter 52 indicates an elapsed time of 3599.999999 seconds, the reset circuit 62 will reset the counter to zero upon receipt of the next clocking signal.

The initial synchronization and subsequent advancement of the counter 52 are controlled by the time counter controller 54. The time counter controller 54 includes a central processing unit 64, such as a Motorola 68302 32-bit microprocessor, along with associated memory circuits, that compares the elapsed-time record of counter 52 with the reference time obtained from an external source. As a result of this comparison, the central processing unit 64 will reset the counter 52 elapsed time so that it is in synchronization with the reference time. The central processing unit 64 also controls the frequency of the output signal of a voltage-controlled oscillator (VCO) 66; this is the signal that is used to establish the clocking signal that is applied to the counter 52.

It is anticipated that clocks 46 incorporated into the synchronization system 50 of this invention will receive reference time signals from GPS satellites 56 currently in orbit. Once each second, these satellites 56 produce a 64-word (512 bit) time-mark message that includes a 24-bit time-of-day signal. This is the reference-time signal used by the time counter controller 54 to regulate the output of the counter 52. The time-of-day signal from a GPS satellite 56 indicates time down to the millisecond and is accurate to the microsecond. In other words, when a GPS satellite 56 generates a signal that indicates the time is 12 hours, 34 minutes, and 56.789 seconds, it is accurate to 12 hours, 34 minutes, and 56.789000 seconds.

The satellite reference time signal is monitored by a GPS receiver 68 that is part of the time controller circuit 54. A suitable GPS receiver 68 is the "NavCore V" receiver available from the Rockwell Corporation of Dallas, Texas. The GPS receiver 68 converts the time-of-day signal into a digital format that can be processed by the central processing unit. In FIGURE 3 a 32-bit reference-time register 70 is shown as being the immediate recipient of a parallel-bit data stream from the GPS receiver 68 for temporarily storing the reference time data. This is for purpose of illustration only. In other versions of the system 50, the GPS receiver 68 can supply the reference time in either parallel or serial format directly to registers inside the central processing unit 64.

The central processing unit 64 compares the reference time to a local-time signal from the counter 52. The local-time signal is obtained from the counter 52 through a 32-bit local-time register 76. The local-time register 76 receives the elapsed time from the counter 52 over a branch of the time bus 60. The local-time register 76 latches upon receipt of a timing pulse signal that is generated by the GPS receiver 68. The GPS receiver 68 generates a timing pulse signal each time a time-mark message from the GPS satellite 56 is received.

The central processing unit 64 initially synchronizes the counter 52 by either performing a rapid increment or decrement of the elapsed time or establishing a new basic elapsed time. The incrementation or decrementation of the elapsed time is performed by the selective generation of either up count or down count clock pulses from the central processing unit 64 to the counter 52. The up count clock pulses are transmitted over an up count signal line 78 and the down count clock pulses are transmitted over a down-count signal line 80. The central processing unit 64 generates a preset initial elapsed-time count that is transferred from the central processing unit to counter data inputs, not shown, over a parallel-bit data stream bus 82.

The voltage-controlled oscillator 66 is regulated by a set of VCO control signals also generated by the central processing unit 64. In one preferred embodiment of the system 50, the central processing unit 64 generates a 14-bit VCO control word for establishing the frequency of the signal generated by the voltage-controlled oscillator. The VCO control word is transferred over a parallel data bus 84 to a digital-to-analog converter 86. The digital-to-analog converter 86 converts the VCO control word into a VCO control signal that is applied to the voltage-controlled oscillator 66. In one preferred version of the system the VCO control signal varies between 0 and 8 VDC.

The voltage-controlled oscillator 66 generates an oscillator output signal that has a frequency higher than the advancement, or accuracy, rate of the clock 46. For a clock 46 constructed to indicate time down to one microsecond, a voltage-controlled oscillator 66 that generates an output signal at 10 MHz, a cycle every 0.1 microsecond, is employed. A suitable oscillator 66 for producing this signal is the Isotemp Research, Inc. Voltage-Controlled Oscillator No. OCXO 134-10. This oscillator produces a variable-frequency output signal between 9,999,988 and 10,000,012 Hz. The frequency of the output signal from the oscillator 66 is directly proportional to the voltage of the VCO control signal.

The oscillator output signal is applied to a peak detector 88 that produces pulses at a rate equal to the frequency of the VCO output signal. The time counter controller 54 may also include an oscillator output branch line 89 over which the oscillator output signal is supplied to the paging station transmitter 40. The paging station transmitter 40 uses the oscillator output signal as a reference signal to regulate the frequency of the carrier signal that it produces. For example, in some preferred radio systems, each transmitter 40 includes a phase-locked loop synthesizer 41 (FIGURE 1) that generates a signal that forms the basis for the carrier signal. The VCO output signal is supplied to the phase-locked loop synthesizer 41 over the branch line 89 to regulate the frequency of the carrier signal.

The clock signal produced by the peak detector 88 is applied to a divider 90. The divider 90 produces the actual counter clocking signals, upon receipt of a fixed number of pulses. In the described embodiment of the invention in which the peak detector generates pulses at a rate ten times the rate at which the counter 52 is intended to advance, the time counter controller 54 includes a divide-by-ten divider 90. This divider 90 generates a counter clocking signal after every tenth clock pulse is received. The clocking signals generated by the divider 90 are applied to the counter 52 over a branch of the up-count signal line 78. Each time the counter 52 receives a pulse, the counter increments the elapsed-time count by one unit.

The time counter controller 54 of FIGURE 3 is further shown as having a network transceiver 92 connected to the central processing unit 64. The network transceiver 92 is a communications port through which commands and data are received by and transmitted from the central processing unit 64. As discussed hereinafter with respect to how clock synchronization is performed, by referring to a reference clock maintained by a MOP 58, one command that is sent to the time counter controller 54 through the transceiver 92 is an instruction to send a time mark signal; one type of data that is sent to the time counter controller through the transceiver is a time difference message that indicates the difference between the time as indicated by the counter 52 and the time as measured from a reference clock. The exact nature of the network transceiver 92 depends on the nature of the communications link between the various clocks of the synchronization system 50. In some systems 50, commands and data are transmitted over radio links; in these systems the transceiver 92 is an actual radio transceiver. In other systems 50 commands and data are exchanged over the publicly switched telephone network 26; in these systems a modem functions as the network transceiver 92. It should further be understood that the network transceiver may not be a distinct component. For example, in a paging system 20 in which the clock synchronization system 50 of this invention is incorporated, the transceiver over which the station controller 38 receives PDBs 28 and other commands and data may function as the network transceiver 92 for the time counter controller 54.

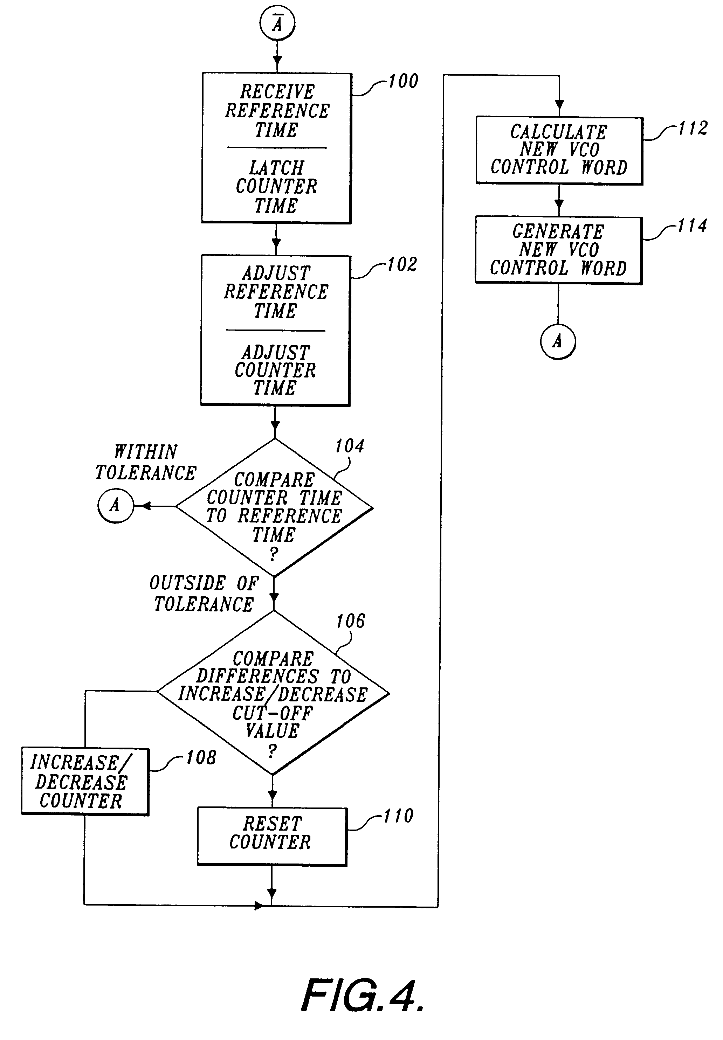

The process by which the synchronization system 50 of this invention regulates a clock 46 is described with reference to the flow chart of FIGURE 4. The clock synchronization process starts with the receipt of the time mark from the GPS satellite 56 by the GPS receiver 68 as depicted by step 100. Upon receipt of the time mark, the GPS receiver 68 generates a reference time signal that, while based on the time signal contained within the time mark, is adjusted to compensate for the satellite-to-receiver propagation delay. The reception of the time mark by the GPS receiver 68 causes the receiver to generate the time pulse signal, which causes the local register 76 to latch the elapsed-time measurement that is generated by the counter 52. Both the reference time signal from the GPS receiver 68 and counter time from the local-time register 76 are applied to the central processing unit 64. In an adjustment step 102 the counter time is similarly adjusted to account for any delays that occur between the receipt of the reference time by the receiver 68 and the latching of the time by the register 76.

Also, during the adjustment step 102, the reference time signal and the counter time signal are placed into a format so that they can be readily compared to each other. For example, the reference time signal is converted from a floating point representation into a fixed point number that is represented in binary format. Depending on the format of the counter time signal maintained by counter 52, an offset value may be added or subtracted to the counter time signal.

Following adjustment step 102 there is a comparison step 104 wherein the counter time is compared to the reference time to produce a time difference factor. If the time difference factor between the current counter time and the reference time is within a preselected tolerance value, there is no need to either reset the counter 52 or adjust the output signal of the voltage-controlled oscillator 66. The synchronization process is terminated until the next reference time signal is received. The tolerance value can be any preselected value within which it is intended that the clock 46 provide an accurate time. For example, if it is desired that the clock 46 be accurate within one microsecond, then the tolerance value should be one microsecond. If the clock 46 need only be accurate to three microseconds, then the tolerance value should be three microseconds.

If the difference between the counter time and the reference time is outside the tolerance value, then the clock in the system proceeds to synchronization and continues with a difference comparison step 106. In the difference comparison step 106, the time difference factor between the clock-time signal and the reference time is compared to a counter increment/decrement cutoff value to determine if the counter should be reset during either the incrementation or decrementation of the elapsed-time count or by the inputting of an entirely new elapsed-time count. In some preferred versions of the system the counter 52 is advanced at a single-microsecond rate; the cutoff value may be five microseconds. Counter time/reference-time differences of five microseconds or less are adjusted through the execution of an increment/decrement counter step 108. In the increment/decrement counter step 108 the central processing unit 64 generates either up-count or down-count commands to reset the counter 52. If the current time/reference-time difference is greater than five microseconds, the central processing unit 64 executes a reset counter step 110 and generates a new elapsed-time count that is loaded into the counter 52. The central processing unit 64 is capable of setting the counter through either steps 108 or 110 because, for smaller adjustments, it may be quicker to advance or retard the counter, whereas, for larger adjustments, it may be quicker to simply reset the elapsed-time count.

After the counter 52 is reset, the central processing unit 64 readjusts the voltage-controlled oscillator 66. The central processing unit 64 initially performs a calculate-new-setting step 112, wherein the central processing unit 64 determines the extent to which the frequency of the output signal of the oscillator 66 should be adjusted up or down. In situations in which the counter time is determined to be greater than the reference time, a VCO control word decreasing the speed of the oscillator output signal is calculated. In cases in which the counter time is less than the reference time, a VCO control word for increasing the frequency of the oscillator output signal is calculated. The increase or decrease of the frequency of the oscillator output signal varies proportionally with the absolute magnitude of the time difference factor between the counter time and the reference time.

One method of calculating the new VCO control word involves first mathematically calculating a VCO setting for theoretically perfectly correcting for the oscillator output drift, and then from that calculation, generating a new control word that corrects for only a portion of the drift. For example, in a version of an invention having a VCO 66 producing an output signal centered at 10 MHz that can be adjusted 12 Hz, if, over an hour's period of time, the measured difference between the counter time and reference time is 27 microseconds, theoretically the VCO output signal should be adjusted by 0.075 Hz to produce a perfectly corrected signal upon which the clocking signal can be based. However, instead of generating a new VCO control word to either increase or decrease the VCO output signal by 0.075 Hz, according to this method the VCO control word would be adjusted so as to cause the generation of VCO output that is 0.0375 Hz higher or lower than its predecessor. An advantage of this less-than-perfect correction is that it reduces the likelihood of overcompensating for any drift in the oscillator output. It should be understood that in the foregoing example, the adjustment to produce an oscillator output signal that is only corrected by 50% of the theoretical perfect correction is merely illustrative. In other versions of the invention, the final adjustment of the VCO control signal may be for a different percent of the theoretical perfect correction. In some versions of the invention, the adjustment of the VCO control word as a percentage of the theoretical perfect adjustment may vary.

After the calculate-new-setting step 112 is executed, the central processing unit 64 then executes a generate-VCO-control step 114. In this step 114 the central processing unit 64 forwards the newly calculated VCO control word to the digital-to-analog converter 86. On receiving the new VCO control word, the digital-to-analog converter 86 produces a new VCO control signal that is applied to the oscillator 66. In response to the receipt of the new VCO control signal, the oscillator 66 produces a new output signal with slightly changed frequency to either increase or decrease the rate at which the counter 52 advances.

In some versions of this invention the oscillator 66, in addition to producing the signal that controls the rate at which the counter 52 advances, is also used to produce an offset reference signal for regulating the carrier signal produced by the paging station transmitter 40. An offset reference signal is produced because, in some paging systems 20, it may be desirable to have the individual paging station transmitters 40 broadcast at carrier frequencies that are slightly offset from each other. The carrier frequencies of the paging station transmitters 40 are slightly offset from each other in order to minimize the occurrence of static null points. A null point is a location where two paging signals are exactly out of phase. At these locations pager 42 will not receive any intelligible signals. A static line of null points can develop along the line where the paging signals sent by two paging station transmitters 40, both of which are operating at exactly the same frequency, are received and are out of phase with each other. Fixed, or static, null points are eliminated by offsetting the carrier frequencies of the paging station transmitters 40. Nulls will still develop. However, the nulls will vary in location over the area in which they develop and, at any given location, a null will be present for only a small percentage of time. Thus, a pager 42 located at such a location will usually receive paging signals.

In order to eliminate the development of static null points, it is desirable to provide the paging system 20 with paging transmitters that have carrier frequencies that are slightly offset from one another. For paging transmitters 40 that do not have internal frequency offset adjustments, the offset frequency may be provided by adjusting the frequency of the output signal from the voltage-controlled oscillator 66. The adjustment of the voltage-controlled oscillator 66 can be performed by having the central processing unit 64 modify the VCO control word so that the oscillator is operated at a frequency X Hz above or below the basic carrier frequency of the paging system 20. For example, the voltage-controlled oscillator 66 associated with a first paging station 24 can be set to run at a base frequency of 10,000,002 Hz; a second oscillator associated with a second paging station can be set to run at a frequency of 10,000,000 Hz; and a third oscillator associated with a third paging station can be set to run at a frequency of 9,999,998 Hz. This offset adjustment of the base, or carrier reference, frequencies of the clocks 46 causes the individual transmitters 40 associated with the clocks to broadcast pages over carrier frequencies that are proportionally offset from each other. This offset adjustment of the output frequency of the voltage-controlled oscillator 66 does have one unintended effect. Since the output frequency of the oscillator controls the rate at which advancement signals are applied to the counter 52, the offset frequency would cause the counter to advance at a rate that is either slower or faster than the normal advance rate. In a multiple clock 46 system, the individual counters 52 advance at different rates. Consequently, after an initialization, owing to the different advancement rates, the individual counters 52 start to indicate different clock times.

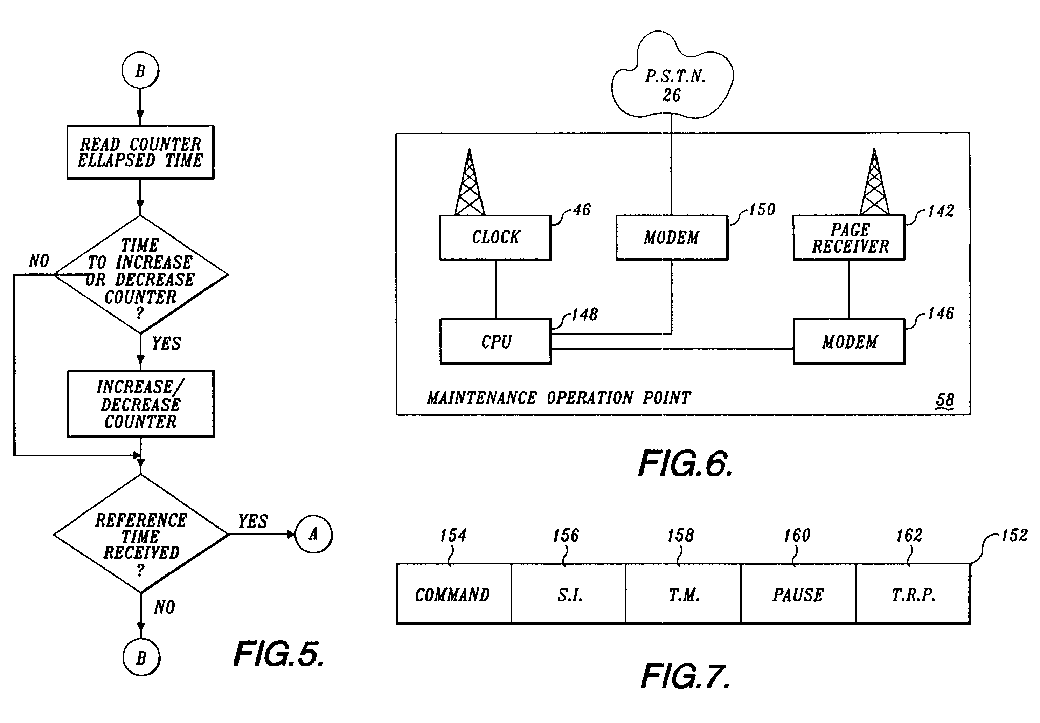

The clock synchronization system 50 of this invention compensates for the increased or decreased advancement of the counter 52 caused by the offset frequency adjustment of the voltage-controlled oscillator 66. The central processing unit 64 contains a set of instructions that causes the central processing unit to periodically increment or decrement the counter 52 in order to adjust for a clock signal rate that is either slower or faster than the intended advancement rate. FIGURE 5 represents the process by which adjustment occurs. The central processing unit continually reads the elapsed-time signal from the counter 52, as represented by step 120, to determine how much time has elapsed since the beginning of a new offset readjustment period. This offset readjustment period is based upon the reciprocal of the difference between the offset frequency and the base frequency of the system 50. For example, if the base frequency is 10,000,000 Hz and the offset frequency is 10,000,002 Hz, the offset adjustment period is 500 milliseconds. Once the central processing unit 64 has determined that the elapsed time has reached the end of an offset adjustment period, represented by the time to increment/decrement counter step 122, the central processing unit 64 automatically sends a down-count clock pulse over the down-count signal line 80 to the counter 52 to decrease the total elapsed-time count by 1 as represented by the increment/decrement counter step 124. The offset adjustment serves to reset the counter 52 so that the counter indicates the actual elapsed time as if it had been advanced by basic clocking signals, not a signal that was generated as a consequence of an offset adjustment applied to the voltage-controlled oscillator. After the increment/decrement counter step 124, the central processing unit 64 continues to wait for the receipt of a reference-time signal as depicted by step 126. If no such signal has been received, the central processing unit 64 continues to monitor the total elapsed time until the end of the next offset adjustment period. If the reference-time signal is received by the central processing unit 64, the central processing unit then proceeds to perform the reference-time comparison and, if necessary, the subsequent resynchronization of the counter and readjustment of the voltage-controlled oscillator as described with reference to FIGURE 4.

As previously discussed, a maintenance operation point, a MOP 58, can be used to compare the time from one or more of the clocks 46 to the reference time. Ideally, the MOP 58, now described with reference to FIGURE 6, is located where the pages broadcast by two or more paging stations 24 can be received. The MOP 58 includes a receiver 142 for receiving the pages that are broadcast by the paging stations 24. A suitable receiver 142 is the MASTR 11 receiver manufactured by the General Electric Company of Lynchburg, Virginia. The signals received by the receiver 142 are converted into digital signals by a modem 146. A suitable modem 146 to perform this task is the AM 7910 modem manufactured by Advanced Micro Devices of Sunnyvale, California. In one preferred embodiment of this invention, modem 146 is operated at a 976.6 baud rate. The paging signals received by the MOP 58 are monitored by a central processing unit (CPU) 148 connected to receive the output signals from the modem 146. The MOP central processing unit 148 has a universal asynchronous receiver-transmitter, not illustrated, that converts the serial-bit data stream from the modem 146 into a parallel-bit data stream suitable for processing by the actual processing elements of the central processing unit.

The maintenance operation point 58 further includes a modem 150 through which commands and data are exchanged with other elements of the paging system 20 over the PSTN 26. In one preferred version of the invention, the maintenance operation point 58 exchanges data and commands only with the paging system controller 23. The paging system controller 23 then forwards specific commands and data to the individual paging stations 24. These commands and data are exchanged with the paging stations through the network transceivers 92 associated with the individual stations. In another preferred version of the invention, the MOP 58 exchanges data and commands directly with one or more of the paging stations that it is designed to monitor. In either version of the invention, the MOP central processing unit 148 may be provided with dial-up capabilities so that it can selectively access the complementary system component with which it has a need to exchange data. This eliminates having to provide a dedicated communications link to the MOP 58. In other versions of the invention, the MOP 58 may exchange maintenance data with other components over a radio channel. It should further be understood that, when a particular maintenance operation point 58 is used to monitor the performance of multiple paging stations 24, the system 20 directs the shutdown of the adjacent stations so that the MOP 58 receives the signals from only the one station. This allows the maintenance operation point 58 to monitor the performance of that station without interference from signals transmitted by other stations. Typically, the system shuts down these stations during periods of time when paging traffic is light.

The maintenance operation point 58 further includes a clock 46 identical to the other clocks 46 that are part of the synchronization system 50 of this invention for monitoring the performance of clocks that are not provided with GPS receivers 68. The MOP clock 46 supplies the current time to the MOP central processing unit 148. The MOP central processing unit 148 compares the current time from its clock 46 to the time marks received from the clocks 46 of the paging stations 24 with which it is associated. The results of these comparisons, the time difference factors, are transmitted back to the clock's central processing unit 64 at the paging station, which uses this information to resynchronize the paging station's clock 46.

The time marks from the paging stations 24 are transmitted in the form of time information commands 152, one of which is illustrated in FIGURE 7. A time information command 152 starts with a command field 154. The command field 154 contains a code that indicates that the command is a time information command 152 with a time mark and that the MOP central processing unit 148 should initiate the time comparison process. The command field 154 is followed by a site identification (SI) field 156. The site identification field 156 contains an indication of which paging station 24 is sending the time information commands 152. A time mark (TM) field 158 follows the site identification field 156. The time mark field 158 indicates the time, from the paging station clock 46, when the time information command 152 was generated. A pause 160 follows the time mark field 158. The pause 160 in data transmission is sent to allow the MOP central processing unit 148 to get ready to receive the time mark, which is actually sent as a time recognition pattern (TRP) 162. This is a specific pattern of signals that the MOP central processing unit 148 recognizes as the time mark. For example, the pattern can be a set of bit transitions, such as is found in a 001100110011 binary code pattern.

The individual paging station controllers 38 periodically form time information commands 152 for transmission to the associated maintenance operation point 58. In some preferred embodiments of the invention, system control equipment in the paging system controller 23 instructs each station controller 38 when to send a time information command 152. At the same time, the paging system controller 23 will further direct the other station controllers to stop transmissions from their paging stations 24. This prevents signals from the other paging stations 24 from interfering with the reception of the time information command 152 by the maintenance operation point 58. When the station controller creates the time information command 152 it may add approximately 10 to 25 microseconds to the time value from the clock 46 into the time value written into the time mark field 158. This is to compensate for the period from the beginning of the transmission of the command 152 to the transmission of the time recognition pattern 162.

Upon receipt of the time information command 152, the MOP central processing unit 148 waits for the bit transitions contained in the time recognition pattern 162. Each transition causes the MOP central processing unit 148 to read the current time from the MOP clock 46. The times at which the bit transitions were received are then averaged to determine the exact time at which the time mark was received. The MOP central processing unit 148 then computes the time difference factor for the period between when the time mark was received and the time according to the MOP clock 46. This time difference factor is adjusted for a path delay time, which is the period between transmission of the time mark and its receipt by the MOP central processing unit 148. The path delay actually comprises the transmission delay, the time it takes for the paging station transmitter 40 to send the time information command 152; the air time between the transmitter and the MOP antenna 144; and the MOP receiver 142 and modem 146 processing delay. Once the time difference factor is adjusted, it is forwarded to the modem 150 for transmission to the appropriate paging station time counter controller 54. Upon receipt of the difference signal, the time counter controller central processing unit then resets the counter 52 and/or readjusts the voltage-controlled oscillator 66 as may be appropriate.

The clock synchronization system 50 of this invention provides a convenient means to both set a number of clocks, so that they will indicate an initial time that is related to a reference clock, and control the advancement of the clocks, so they all advance at the same rate. Thus, all the clocks that are part of the system run in parallel with a reference clock. One reference clock to which the individual clocks that form this system are all synchronized is the clock contained in the GPS satellite 56. A reference time signal from the GPS satellite 56 can be received by either the clocks 46 themselves or the maintenance operation points 58 associated therewith. There is no need to establish any type of land link between a reference clock and the system clocks 46 or between the system clocks 46 and the maintenance operation points 58 with which they may be associated. Consequently, the synchronization system 50 of this invention does not require the assignment of increasingly scarce radio frequencies or construction of some type of expensive hard wire link between the reference clock and the system clocks 46. Moreover, there is no need to provide a hard wire link between the reference clock and system clocks 46. This makes the system 50 of this invention well suited to synchronize portable clocks 46, including clocks that are used while they are motion.

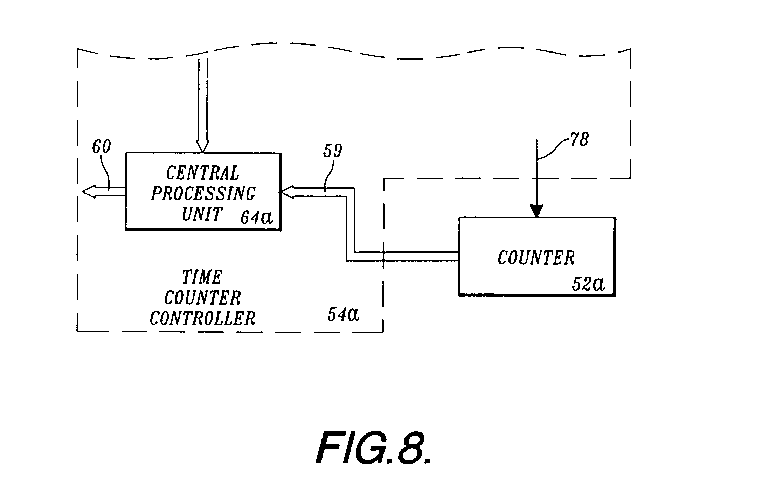

As depicted by FIGURE 8, in an alternative embodiment of the invention, the actual clock time may not be maintained by a counter 52a. Instead, in this embodiment of the invention, counter 52a may simply be an elapsed time counter that generates an elapsed time signal that is forwarded directly to a central processing unit 64a over a data bus 59. For example, in one version of this embodiment of the invention, counter 52a may be a one-minute counter that is accurate to the microsecond. The central processing unit 64a calculates the clock time by adding or subtracting a counter offset value to the elapsed time received from the counter 52a. The counter offset value is a scalar factor that is always held in storage by the central processing unit 64a. The central processing unit 64a then forwards the calculated time signal to the other station controller 38 components over a time bus 60a.

In this embodiment of the invention, during the initial stages of the clock synchronization process, the GPS receiver 68 forwards the time pulse signal to the central processing unit 64a, connection not shown, to trigger the storage of the most current calculated time by the central processing unit. The central processing unit 64a compares the calculated time with the reference time from the GPS receiver 68. On the basis of this comparison, the central processing unit 64a updates the counter offset value so that it reflects the most accurate difference between the counter elapsed time and the reference time. The central processing unit 64a also, in a manner similar to that described with respect to FIGURE 4, generates a new VCO control word to adjust the rate at which the counter 52a is advanced.

In versions of this embodiment of the invention used to generate an offset reference signals for forwarding to the paging system transmitters 40, the individual central processing units 64a adjust the counter offset values associated therewith to compensate for the offset advancement of the counters 52a. These adjustments are in the form of a periodic incrementation or decrementation of the counter offset values that occur independently of the resynchronization of the clocks.

An advantage of this embodiment of the invention is that it eliminates the need to provide a counter that can be reset either incrementally by signals over up- and down-count lines or in their entirety by signals over a parallel data bus. Another advantage of the clock of this invention is that the central processing unit 64a can calculate the clock time more rapidly than it can receive the clock time from a counter. In versions of the invention wherein the central processing unit 64a performs functions other than controlling the advancement of the counter 52a, this makes the most current clock time more readily available. Consequently, the central processing unit 64a is able to execute the other functions it is intended to perform at a time more closely matching the precise moment when those functions are to be performed.

The foregoing detailed description has been limited to specific embodiments of the invention. It will be apparent, however, that variations and modifications can be made to this invention with the attainment of some or all of the advantages thereof. For example, in some versions of the invention, counter 52 or counter 52a may be replaced by a gate arrays that generate output signals to indicate current time readings. In these embodiments of the invention the divider may be incorporated integrally into the gate array. Also, the up and down count signals used to incrementally modify the clock time signal maintained by the gate array will be directly connected to the gate array. In still other embodiments of the invention the divider may be eliminated. In a version of this embodiment of the invention wherein the VCO 66 generates a 10 MHz signal the counter would advance at a 100 nanosecond rate. Other versions of the invention may not include a set of up and down count lines between the central processing unit 64 and the counter 52 to incrementally advance or retard the counter. In these versions of the invention a switching circuit may be attached to the divider 90 to cause undivided clocking signals from the peak detector 88 to be directly applied to the counter 52 to rapidly advance it; the switch may also be constructed to prevent signals from the peak detector from being applied to the divider to, in turn, stop the divider from generating clocking signals so as to retard the advancement of the counter.

Furthermore, reference clocks other than those maintained by the GPS satellite 56 may be used to provide reference clock signals. For instance, one could provide a local clock synchronization system 50 of this invention, wherein a reference-time signal is broadcast from a low-power transmitter to a number of clocks located nearby. Each of the time counter controllers 54 of this system would include a complementary receiver for picking up the reference-time signals. This system could be used when it is necessary to provide a number of very accurate clocks in one location for a short period of time. For example, it may be utilized for seismic explorations.

Furthermore, it should also be understood that the exact structure of the time information command 152 that may be transmitted between a system clock 46 and a complementary maintenance operation point 58 is similarly meant to be illustrative and not limiting. For example, some commands may be formatted so that a command word will be immediately followed by a time recognition pattern. In these versions of the invention the time mark would follow the time recognition pattern. Alternatively, some commands may be self clocking. This means that each time information command 152 may not include a specific command directing the MOP 58 to initiate the time comparison process. Instead, the MOP 58 may be configured to automatically start the time comparison process for a particular paging station 24 upon receipt of a time mark signal from that station. Also, while, in this version of the invention, the clocks 46 have been shown as being separate from the other components with which they are used, it should, of course, be understood that this is for purposes of illustration and not meant to be limiting. It may, for example, be desirable to build a clock into a system, e.g., building it into a station controller 38 of a paging station 24. Such assembly may make sense for efficient and economic use of components to have the processor that controls the operation of the station further serve as the processor that controls the resynchronization of the clock counter and the resetting of the voltage-controlled oscillator 66 that advances the counter.

Similarly, it should be understood that, while, in the described version of the invention, this synchronization system 50 is part of a paging system 20, it can be used in other environments. For example, the system 50 may be used to synchronize clocks that are part of a two-way simulcast system, a telemetry system, a data acquisition system, or a system intended to exchange data with mobile receivers. Therefore, it is the object of the appended claims to cover all such variations as come within the scope of the claims.

## Claims

1. A clock that can be synchronized to the time maintained by a reference clock that transmits a reference-time signal, said clock comprising:
a. a sequentially advanceable counter for maintaining a clock-time signal in response to a clocking signal;
b. a time counter controller having an initialization circuit connected to said counter for establishing a clock initial state, a counter advance circuit connected to said counter for generating said clocking signal thereto, and a clock synchronization circuit connected to receive a time difference factor, and connected to said initialization circuit and said counter advance circuit whereby, when said time difference factor is received, said clock synchronization circuit selectively directs said initialization circuit to establish a new clock initial state and said counter advance circuit to change said clocking signal; and
c. a difference-calculating circuit including a first receiving circuit for receiving the reference-time signal and a second receiving circuit for receiving said clock-time signal, and a difference-processing circuit for calculating a difference between the reference-time signal and said clock-time signal as said time difference factor and for transmitting said time difference factor to said clock synchronization circuit.

2. The clock of Claim 1, wherein said difference-calculating circuit's first receiving circuit is connected to said clock synchronization circuit for supplying the reference-time signal thereto; said difference-calculating circuit's second receiving circuit comprises a link between said counter and said clock synchronization circuit over which said clock-time signal is applied to said clock synchronization circuit; and wherein said clock synchronization circuit calculates said time difference factor between said reference-time signal and said clock-time signal.

3. The clock of Claim 2, wherein said clock synchronization circuit is a microprocessor.

4. The clock of Claim 2, wherein said difference-calculating circuit's first receiving circuit is a reference-time receiver configured to receive the reference-time signal and is connected to said clock synchronization circuit for forwarding the reference-time signal thereto.

5. The clock of Claim 4, wherein the reference time signal is received from a satellite and wherein said reference-time receiver is adapted to receive the reference-time signal from the satellite.

6. The clock of Claim 4, wherein:said difference-calculating circuit's second receiving circuit further includes a register connected between said counter and said clock synchronization circuit wherein said register latches said clock-time signal upon receipt of a timing pulse signal, and said clock synchronization circuit calculates said time difference factor from said latched clock-time signal; and
wherein said reference-time receiver is connected to said register for supplying said timing pulse signal thereto, and wherein said timing pulse signal is generated when said first reference-time receiver receives the reference-time signal.

7. The clock of Claim 4, wherein said clock synchronization circuit is a microprocessor.

8. The clock of Claim 2, wherein said counter advance circuit includes a voltage-controlled oscillator that generates a variable-frequency output signal to produce a variable-frequency clocking signal and wherein said clock synchronization circuit applies a control voltage to said voltage-controlled oscillator to establish said clocking signal.

9. The clock of Claim 7, wherein said voltage-controlled oscillator output signal is at a frequency higher than the frequency of said clocking signal and wherein said counter advance circuit includes a divider for receiving said voltage-controlled oscillator output signal and producing said clock-time signal therefrom.

10. The clock of Claim 9, wherein said difference-calculating circuit's first receiving circuit is a reference-time receiver configured to receive the reference-time signal and is connected to said clock synchronization circuit for forwarding the reference-time signal thereto.

11. The clock of Claim 10, wherein:said difference-calculating circuit's second receiving circuit further includes a register connected between said counter and said clock synchronization circuit wherein said register latches said clock-time signal upon receipt of a timing pulse signal and said clock synchronization circuit calculates said time difference factor from said latched clock-time signal; and wherein said reference-time receiver is connected to said register for supplying said timing pulse signal thereto, and wherein said timing pulse signal is generated when said reference-time receiver receives the reference-time signal.

12. The clock of Claim 1, wherein:
said difference-calculating circuit is part of a maintenance operation point distal from said time counter controller and wherein said maintenance operation point includes: a first receiver for periodically receiving the reference-time signal from the reference clock; a maintenance operation clock connected to said first receiver for maintaining the reference-time signal; a second receiver for receiving said clock-time signal; and, a time-difference-calculating circuit connected to said maintenance operation point clock for receiving the reference-time signal and to said second receiver for receiving said clock-time signal for calculating said time difference factor between the reference-time signal and said clock-time signal and forwarding a difference signal indicative of said time difference factor to said clock synchronization circuit; and whereinsaid clock synchronization circuit includes a receiver for receiving said difference signal from said maintenance operation point.

13. A clock synchronization system that operates with respect to a reference-time clock that transmits a reference-time signal, comprising:
a. a plurality of clocks wherein each said clock includes:a sequentially advanceable counter for maintaining a clock-time signal in response to a clocking signal;
a time counter controller having an initialization circuit connected to said counter for establishing a clock initial state as said clock-time signal; a counter advance circuit connected to said counter for generating said clocking signal thereto; and a clock synchronization circuit connected to receive a time difference factor, and connected to said initialization circuit and said counter advance circuit whereby, when said time difference factor is received, said clock synchronization circuit selectively directs said initialization circuit to establish a new clock initial state and said counter advance circuit to change said counter advance signal;
b. wherein a first one of said clocks further includes a reference-time receiver for receiving the reference-time signal from the reference clock and connected to said clock synchronization circuit for supplying the reference-time signal thereto; a link between said counter of said first one of said clocks and said clock synchronization circuit for supplying said clock-time signal to said clock synchronization circuit; and wherein said clock synchronization circuit of said first one of said clocks calculates said time difference factor between said reference-time signal and said clock-time signal;
c. a maintenance operation point distal from a second one of said clocks including a first receiver for receiving the reference-time signal from the reference clock, a maintenance operation clock connected to said first receiver for maintaining the reference-time signal, a second receiver for receiving said clocktime signal from said second one of said clocks, and a time-difference-calculating circuit connected to said maintenance operation point clock for receiving the reference-time signal and to said second receiver for receiving said clock-time signal for calculating said time difference factor between the reference-time signal and said clock-time signal and forwarding a difference signal indicative of said time difference factor to said second one of said clocks; and
d. a receiving unit at said second one of said clocks for receiving said difference signal and connected to said clock synchronization circuit for supplying said time difference factor thereto.

14. The clock synchronization system of Claim 13, wherein the reference time signal is received from a satellite and wherein said reference-time receivers are adapted to receive the reference-time signal from the satellite.

15. The clock synchronization system of Claim 13, wherein: said first one of said clocks further includes a register connected between said counter and said clock synchronization circuit wherein said register latches said clock-time signal upon receipt of a timing pulse signal and said clock synchronization circuit calculates said time difference factor from said latched clock-time signal; and said reference-time receiver is connected to said register for supplying said timing pulse signal thereto, and wherein said timing pulse signal is generated when said reference-time receiver of said first one of said clocks receives the reference-time signal.

16. The clock synchronization system of Claim 13, wherein said counter advance circuits each include a voltage-controlled oscillator that generates a variable-frequency output signal to produce a variable-frequency clocking signal and wherein each said clock synchronization circuit applies a control voltage to said voltage-controlled oscillator associated therewith to establish said clocking signals.

17. The clock synchronization system of Claim 16, wherein said voltage-controlled oscillator output signals are at higher frequencies than the frequencies of said clocking signals and wherein each said counter advance circuit includes a divider for receiving said voltage-controlled oscillator output signal and producing said clocking signal therefrom.

18. The clock synchronization system of Claim 13, wherein:said clock synchronization circuits of at least two said clocks are configured so as to cause said counter advance circuits associated therewith to generate clocking signals that are different from each other so as to cause said counters to advance at different rates;said clock initialization circuits of said at least two clocks are configured to adjust said counters associated therewith so that between initializations of said clock times are modified so as to at least periodically be substantially identical to each other.

19. The clock synchronization system of Claim 18, wherein said clock incrementation circuits of said at least two clocks modify said clock-time signals by periodically incrementally changing said clock-time signal maintained by said counters associated therewith.

20. A clock synchronization system for synchronizing at least one clock to the time maintained by a reference clock that transmits a reference-time signal, wherein said at least one clock comprises:
a. a sequentially advanceable counter for maintaining an elapsed time signal in response to a clocking signal;
b. a timer counter controller including: a clock time processor connected to said counter for receiving said elapsed time signal for generating a clock time signal based on said elapsed time and a counter offset value wherein said counter offset value is stored by said clock time processor; a counter advance circuit connected to said counter for generating said clocking signal thereto, wherein said counter advance circuit generates said clocking signal at a variable rate; and a clock synchronization circuit connected to receive a time difference factor, and
connected to said clock time processor and said counter advance circuit whereby, when said time difference factor is received, said clock synchronization circuit selectively updates said counter offset value and selectively adjusts said rate at which said counter advance circuit generates said counter advance signal; and
c. a difference-calculating circuit including a first receiving circuit for receiving the reference-time signal and a second receiving circuit for receiving said counter clock time signal, and a difference-processing circuit for calculating a difference between the reference-time signal and said clock time signal as said time difference factor and for transmitting said time difference factor to said clock synchronization circuit.

21. The clock synchronization system of Claim 20, wherein said time counter controller includes a central processing unit and said central processing unit comprises said clock time processor and said clock synchronization circuit.

22. The clock synchronization system of Claim 21, wherein said difference-calculating circuit's first receiving circuit is connected to said central processing unit for supplying the reference-time signal thereto; and said central processing unit calculates said time difference factor between said reference-time signal and said clock time.

23. The clock synchronization system of Claim 21, wherein:
said difference-calculating circuit is part of a maintenance operation point distal from said time counter controller and wherein said maintenance operation point includes: a first receiver for periodically receiving the reference-time signal from the reference clock; a maintenance operation clock connected to said first receiver for maintaining the reference-time signal; a second receiver for receiving said counter clock time; and, a time-difference-calculating circuit connected to said maintenance operation point clock for receiving the reference-time signal and to said second receiver for receiving said counter clock time for calculating said time difference factor between the reference-time signal and said counter clock time and forwarding a difference signal indicative of said time difference factor to said clock synchronization circuit; and wherein
said time counter controller includes a receiver for receiving said difference signal from said maintenance operation point wherein in said receiver is connected to said central processing unit for forwarding said difference signals thereto as said time difference factor.

24. A clock synchronization system that operates with respect to a reference-time clock that transmits a reference-time signal, comprising:
a. a plurality of clocks wherein each said clock includes:
a sequentially advanceable counter for maintaining an elapsed-time in response to a clocking signal;
a time counter controller including: a clock time processor connected to said counter for receiving the value of said elapsed-time for generating a clock-time signal based on said elapsed time value and on a counter offset value wherein said counter offset value is stored by said clock time processor; a counter advance circuit connected to said counter for generating said clocking signal thereto, wherein said counter advance circuit generates said clocking signal at a variable rate; and a clock synchronization circuit connected to receive a time difference factor, and connected to said clock time processor and said counter advance circuit whereby, when said time difference factor is received, said clock synchronization circuit selectively updates said counter offset value and selectively adjusts said rate at which said counter advance circuit generates said counter advance signal;
b. wherein a first one of said clocks further includes a reference-time receiver for receiving the reference-time signal from the reference clock and connected to said clock synchronization circuit for supplying the reference-time signal thereto; a link between said clock time processor of said first one of said clocks and said clock synchronization circuit for supplying said clock-time signal to said clock synchronization circuit; and wherein said clock synchronization circuit of said first one of said clocks calculates said time difference factor between said reference-time signal and said clock-time signal;
c. a maintenance operation point distal from a second one of said clocks including a first receiver for receiving the reference-time signal from the reference clock, a maintenance operation clock connected to said first receiver for maintaining the reference-time signal, a second receiver for receiving said clocktime signal from said second one of said clocks, and a time-difference-calculating circuit connected to said maintenance operation point clock for receiving the reference-time signal and to said second receiver for receiving said clock-time signal for calculating said time difference factor between the reference-time signal and said clock-time signal and forwarding a difference signal indicative of said time difference factor to said second one of said clocks; and
d. a receiving unit at said second one of said clocks for receiving said difference signal and connected to said clock synchronization circuit for supplying said time difference factor thereto.

25. The clock synchronization system of Claim 24, wherein:
at least two said clocks are provided with clock synchronization circuits are configured so as to cause said counter advance circuits associated therewith to generate clocking signals that are different from each other so as to cause said counters to advance at different rates; andsaid clock synchronization circuits of said at least two clocks are configured to update said counter offset values associated therewith so that between when said time difference factors are received, said clock time processors will generate clock times that are substantially identical to each other.

26. The clock synchronization system of Claim 25, wherein said clock synchronization circuits of said at least two clocks update said counter offset values by periodically incrementally said counter offset values.

27. A clock network for providing time signals and reference signals comprising:
a plurality of clocks, each said clock including:
a sequentially advanceable counter for maintaining a time value in response to a reference signal;
a signal generator for producing said reference signal for application to said counter associated therewith wherein, at least two signal generators are configured to produce different said reference signals so that said counters associated therewith will advance at different rates;
a time value processing circuit connected to said counter for producing a time signal based on said time value wherein, said clock time value processing circuits associated with said at least two signal generators are configured to produce clock times based on said dissimilar time values that are substantially identical to each other.

28. The clock network of Claim 27, wherein said counters maintain clock times upon which said time signals are produced and said time value processing circuits periodically increment said counters so that said clock times are periodically substantially identical to each other.

29. The clock network of Claim 28, wherein said reference signals are variable frequency signals and said signal generators produce said reference signals at different frequencies.

30. The clock network of Claim 27, wherein: said counters maintain elapsed time counts; said time value processing circuits maintain separate counter offset values for combining with said elapsed time counts to produce time signals; and said time value processing circuits periodically incrementally change said counter offset values so that said time signals are periodically substantially identical with each other.

31. The clock network of Claim 30, wherein said reference signals are variable frequency signals and said signal generators produce said reference signals at different frequencies.

32. A broadcast network comprising:
a plurality of radio transmitters for broadcasting radio signals at a carrier frequency, each said transmitter including a carrier frequency control circuit for establishing said carrier frequency of said transmitter, wherein said carrier frequency control circuit establishes said carrier frequency based on a reference signal;
a plurality of clock circuits, wherein each said clock circuit is associated with a corresponding one of said plurality of radio transmitters, each said clock circuit including:
a sequentially advanceable counter for maintaining a time value in response to said reference signal;
a signal generator for producing said reference signal for application to said carrier frequency control unit and said counter associated therewith wherein, at least two clock signal generators are configured to produce different said reference signals so that said transmitters associated therewith will broadcast at different carrier frequencies and said counters associated therewith will advance at different rates so as to cause said counters to maintain dissimilar time values;
a time value processing circuit connected to said counter for producing a clock time based on said time value wherein, said clock time value processing circuits associated with said at least two signal generators are configured to produce clock times based on said dissimilar time values that are substantially identical to each other.

33. The broadcast network of Claim 32, wherein said counters maintain clock times upon which said time signals are produced and said time value processing circuits periodically increment said counters so that said clock times are periodically substantially identical to each other.

34. The broadcast network of Claim 33, wherein said reference signals are variable frequency signals and said signal generators produce said reference signals at different frequencies.

35. The broadcast network of Claim 32, wherein: said counters maintain elapsed time counts; said time value processing circuits maintain separate counter offset values for combining with said elapsed time counts to produce time signals; and said time value processing circuits periodically incrementally change said counter offset values so that said time signals are periodically substantially identical with each other.

36. The broadcast network of Claim 35, wherein said reference signals are variable frequency signals and said signal generators produce said reference signals at different frequencies.

## Patentansprüche

1. Eine Uhr, die mit der Zeit synchronisiert werden kann, die durch eine Referenzuhr erhalten wird, welche ein Referenzzeitsignal überträgt, wobei die Uhr aufweist:
a. einen sequentiell fortschaltbaren Zähler zum Erhalten eines Uhrzeitsignals in Reaktion auf ein Taktgebersignal;
b. eine Zeitzählersteuereinheit mit einer Initialisierungsschaltung, die mit dem genannten Zähler verbunden ist, um einen Uhranfangsstatus zu bilden, eine Zählerfortschaltschaltung, die mit dem genannten Zähler verbunden ist, um für diesen das genannte Taktgebersignal zu erzeugen, und eine Uhrsynchronisierungsschaltung, die verbunden ist, um einen Zeitdifferenzfaktor zu erhalten, und die mit der genannten Initialisierungsschaltung und mit der genannten Zählerfortschaltschaltung verbunden ist, so daß, wenn der genannte Zeitdifferenzfaktor empfangen wird, die genannte Uhrsynchronisierungsschalung die genannte Initialisierungsschaltung selektiv anweist, einen neuen Uhranfangsstatus zu bilden, und die genannte Zählerfortschaltschaltung selektiv anweist, das genannte Taktgebersignal zu ändern; und
c. eine Differenzrechenschaltung mit einer ersten Empfangsschaltung zum Empfangen des Referenzzeitsignals und mit einer zweiten Empfangsschaltung zum Empfangen des genannten Uhrzeitsignals und eine Differenzverarbeitungsschaltung zum Errechnen einer Differenz zwischen dem Referenzzeitsignal und dem genannten Uhrzeitsignal als der genannte Zeitdifferenzfaktor und zum Übertragen des genannten Zeitdifferenzfaktors zu der genannten Uhrsynchronisierungsschaltung.

2. Die Uhr nach Anspruch 1, bei welcher die erste Empfangsschaltung der genannten Differenzrechenschaltung mit der genannten Uhrsynchronisierungsschaltung zum Liefern eines Referenzzeitsignals zu dieser verbunden ist; bei welcher die zweite Empfangsschaltung der Differenzrechenschaltung eine Verbindung zwischen dem genannten Zähler und der genannten Uhrsynchronisierungsschaltung aufweist, wobei über diese Verbindung das genannte Uhrzeitsignal auf die genannte Uhrsynchronisierungsschaltung aufgebracht wird; und bei welcher die genannte Uhrsynchronisierungsschaltung den genannten Zeitdifferenzfaktor zwischen dem genannten Referenzzeitsignal und dem genannten Uhrzeitsignal errechnet.

3. Die Uhr nach Anspruch 2, bei welcher die genannte Uhrsynchronisierungsschaltung ein Mikroprozessor ist.

4. Die Uhr nach Anspruch 2, bei welcher die erste Empfangsschaltung der genannten Differenzrechenschaltung ein Referenzzeitempfänger ist, der so ausgestaltet ist, um das Referenzzeitsignal zu empfangen, und der mit der genannten Uhrsynchronisierungsschaltung zum Liefern des Referenzzeitsignals zu dieser verbunden ist.

5. Die Uhr nach Anspruch 4, bei welcher das Referenzzeitsignal von einem Satellit empfangen wird und bei welcher der genanne Referenzzeitempfänger dazu befähigt ist, das Referenzzeitsignal von dem Satellit zu empfangen.

6. Die Uhr nach Anspruch 4, bei welcher die zweite Empfangsschaltung der genannten Differenzrechenschaltung weiterhin ein Register aufweist, das zwischen dem genannten Zähler und der genannten Uhrsynchronisierungsschaltung verbunden ist, wobei das genannte Register das genannte Uhrzeitsignal nach Empfang eines Zeitgeberimpulssignals speichert und wobei die genannte Uhrsynchronisierungsschaltung den genannten Zeitdifferenzfaktor aus dem genannten gespeicherten Uhrzeitsignal errechnet; und
bei welcher der genannte Referenzzeitempfänger mit dem genannten Register zum Liefern des genannten Zeitgeberimpulssignals zu diesem verbunden ist und bei welcher das genannte Zeitgeberimpulssignal erzeugt wird, wenn der genannte erste Referenzzeitempfänger das Referenzzeitsignal empfängt.

7. Die Uhr nach Anspruch 4, bei welcher die genannte Uhrsynchronisierungsschaltung ein Mikroprozessor ist.

8. Die Uhr nach Anspruch 2, bei welcher die genannte Zählerfortschaltschaltung einen spannungsgesteuerten Oszillator aufweist, der ein Ausgangssignal mit variabler Frequenz erzeugt, um ein Taktgebersignal mit variabler Frequenz zu erzeugen, und bei welcher die genannte Uhrsynchronisierungsschaltung eine Steuerspannung auf den genannten spannungsgesteuerten Oszillator aufbringt, um das genannte Taktgebersignal zu bilden.

9. Die Uhr nach Anspruch 7, bei welcher das Ausgangssignal des genannten spannungsgesteuerten Oszillators auf einer Frequenz höher als die Frequenz des genannen Taktgebersignals ist und bei welcher die genannte Zählerfortschaltschaltung einen Teiler aufweist, um das Ausgangssignal des genannten spannungsgesteuerten Oszillators zu empfangen und um aus diesem Ausgangssignal das genannte Uhrzeitsignal zu erzeugen.

10. Die Uhr nach Anspruch 9, bei welcher die erste Empfangsschaltung der genannten Differenzrechenschaltung ein Referenzzeitempfänger ist, der so ausgestaltet ist, um das Referenzzeitsignal zu empfangen, und der mit der genannten Uhrsynchronisierungsschaltung zum Liefern des Referenzzeitsignals zu dieser verbunden ist.

11. Die Uhr nach Anspruch 10, bei welcher die zweite Empfangsschaltung der genannten Differenzrechenschaltung ferner ein Register aufweist, das zwischen dem genannten Zähler und der genannten Uhrsynchronisierungsschaltung verbunden ist, wobei das genannte Register das genannte Uhrzeitsignal nach Empfang eines Zeitgeberimpulssignals speichert und wobei die genannte Uhrsynchronisierungsschaltung den genannten Zeitdifferenzfaktor aus dem genannten gespeicherten Uhrzeitsignal errechnet; und bei welcher der genannte Referenzzeitempfänger mit dem genannten Register zum Liefern des genannten Zeitgeberimpulssignals zu diesem verbunden ist und bei welcher das genannte Zeitgeberimpulssignal erzeugt wird, wenn der genannte Referenzzeitempfänger das Referenzzeitsignal empfängt.

12. Die Uhr nach Anspruch 1, bei welcher:
die genannte Differenzrechenschaltung ein Teil eines von der genannten Zeitzählersteuereinheit fernen Erhaltungsoperationspunkts ist und wobei der genannte Erhaltungsoperationspunkt aufweist: einen ersten Empfänger zum periodischen Empfangen des Referenzzeitsignals von der Referenzuhr; eine Erhaltungsoperationsuhr, die mit dem genannten ersten Empfänger zum Erhalten des Referenzzeitsignals verbunden ist; einen zweiten Empfänger zum Empfangen des genannten Uhrzeitsignals; und eine Zeitdifferenzrechenschaltung, die mit der genannten Erhaltungsoperationspurkt-Uhr zum Empfangen des Referenzzeitsignals und mit dem genannten zweiten Empfänger zum Empfangen des Uhrzeitsignals verbunden ist, um den genannten Zeitdifferenzfaktor zwischen dem Referenzzeitsignal und dem genannten Uhrzeitsignal zu errechnen und um ein Differenzsignal, das für den genannten Zeitdifferenzfaktor kennzeichnend ist, zu der genannten Uhrsynchronisierungsschaltung zu liefern; und wobei die genannte Uhrsynchronisierungsschaltung einen Empfänger zum Empfangen des genannten Differenzsignals von dem genannten Erhaltungsoperationspunkt aufweist.

13. Ein Uhrsynchronisierungssystem, welches in Bezug auf eine Referenzzeituhr arbeitet, welche ein Referenzzeitsignal überträgt, aufweisend:
a. eine Mehrzahl von Uhren, wobei jede genannte Uhr aufweist: einen sequentiell fortschaltbaren Zähler zum Erhalten eines Uhrzeitsignals in Reaktion auf ein Taktgebersignal;
eine Zeitzählersteuereinheit mit einer Initialisierungsschaltung, die mit dem genannten Zähler verbunden ist, um einen Uhranfangsstatus als das genannte Uhrzeitsignal zu bilden; eine Zählerfortschaltschaltung, die mit dem genannten Zähler verbunden ist, um für diesen das genannte Taktgebersignal zu erzeugen; und eine Uhrsynchronisierungsschaltung, die verbunden ist, um einen Zeitdifferenzfaktor zu erhalten, und die mit der genannten Initialisierungsschaltung und mit der genannten Zählerfortschaltschaltung verbunden ist, so daß, wenn der genannte Zeitdifferenzfaktor empfangen wird, die genannte Uhrsynchronisierungsschaltung die genannte Initialisierungsschaltung selektiv anweist, einen neuen Uhranfangsstatus zu bilden, und die genannte Zählerfortschaltschaltung selektiv anweist, das genannte Zählerfortschaltsignal zu ändern;
b. wobei eine erste der genannten Uhren ferner einen Referenzzeitempfänger zum Empfangen des Referenzzeitsignals von der Referenzuhr aufweist, wobei der Referenzzeitempfänger mit der genannten Uhrsynchronisierungsschaltung zum Liefern des Referenzzeitsignals zu dieser verbunden ist; wobei eine Verbindung zwischen dem genannten Zähler der genannten ersten der genannten Uhren und der genannten Uhrsynchronisierungsschaltung zum Liefern des genannten Uhrzeitsignals zu der genannten Uhrsynchronisierungsschaltung vorgesehen ist; und wobei die genannte Uhrsynchronisierungsschaltung der genannten ersten der genannten Uhren den genannten Zeitdifferenzfaktor zwischen dem genannten Referenzzeitsignal und dem genannten Uhrzeitsignal errechnet;
c. einen von einer zweiten der genannten Uhren fernen Erhaltungsoperationspunkt, welcher aufweist: einen ersten Empfänger zum Empfangen des Referenzzeitsignals von der Referenzuhr, eine Erhaltungsoperationsuhr, die mit dem genannten ersten Empfänger zum Erhalten des Referenzzeitsignals verbunden ist, einen zweiten Empfänger zum Empfangen des genannten Uhrzeitsignals von der genannten zweiten der genannten Uhren und eine Zeitdifferenzrechenschaltung, die mit der genannten Erhaltungsoperationspunkt-Uhr zum Empfangen des Referenzzeitsignals und mit dem genannten zweiten Empfänger zum Empfangen des genannten Uhrzeitsignals verbunden ist, um den genannten Zeitdifferenzfaktor zwischen dem Referenzzeitsignal und dem genannten Uhrzeitsignal zu errechnen und um ein Differenzsignal, das für den genannten Zeitdifferenzfaktor kennzeichnend ist, zu der genannten zweiten der Uhren zu liefern; und
d. eine Empfangseinheit bei der genannten zweiten der genannten Uhren zum Empfangen des genannten Differenzsignals, wobei die Empfangseinheit mit der genannten Uhrsynchronisierungsschaltung zum Liefern des genannten Zeitdifferenzfaktors zu dieser verbunden ist.

14. Das Uhrsynchronisierungssystem nach Anspruch 13, bei welchem das Referenzzeitsignal von einem Satelliten empfangen wird und bei welchem die genannten Referenzzeitempfänger dazu befähigt sind, das Referenzzeitsignal von dem Satelliten zu empfangen.

15. Das Uhrsynchronisierungssystem nach Anspruch 13, bei welchem: die genannte erste der genannten Uhren weiterhin ein Register aufweist, das zwischen dem genannten Zähler und der genannten Uhrsynchronisierungsschaltung verbunden ist, wobei das genannte Register das genannte Uhrzeitsignal nach Empfang eines Zeitgeberimpulssignals speichert und wobei die genannte Uhrsynchronisierungsschaltung den genannten Zeitdifferenzfaktor aus dem genannten gespeicherten Uhrzeitsignal errechnet; und wobei der genannte Referenzzeitempfänger mit dem genannten Register zum Liefern des genannten Zeitgeberimpulssignals zu diesem verbunden ist und wobei das genannte Zeitgeberimpulssignal erzeugt wird, wenn der genannte Referenzzeitempfänger der genannten ersten der genannten Uhren das Referenzzeitsignal empfängt.

16. Das Uhrsynchronisierungssystem nach Anspruch 13, bei welchem die genannten Zählerfortschaltschaltungen jeweils einen spannungsgesteuerten Oszillator aufweisen, der ein Ausgangssignal mit variabler Frequenz erzeugt, um ein Taktgebersignal mit variabler Frequenz zu erzeugen, und bei welchem jede genannte Uhrsynchronisierungsschaltung eine Steuerspannung auf den genannten, mit dieser verbundenen spannungsgesteuerten Oszillator aufbringt, um das genannte Taktgebersignal zu bilden.

17. Das Uhrsynchronisierungssystem nach Anspruch 16, bei welchem die Ausgangssignale der genannten spannungsgesteuerten Oszillatoren auf Frequenzen höher als die Frequenzen der genannten Taktgebersignale sind und bei welchem jede genannte Zählerfortschaltschaltung einen Teiler aufweist, um das Ausgangssignal des genannten spannungsgesteuerten Oszillators zu empfangen und um aus diesem Ausgangssignal das genannte Taktgebersignal zu erzeugen.

18. Das Uhrsynchronisierungssystem nach Anspruch 13, bei welchem: die genannten Uhrsynchronisierungsschaltungen von wenigstens zwei der genannten Uhren so ausgestaltet sind, um die mit diesen verbundenen Zählerfortschaltschaltungen dazu zu veranlassen, Taktgebersignale zu erzeugen, welche voneinander verschieden sind, um so zu verursachen, daß die genannten Zähler mit unterschiedlichen Geschwindigkeiten fortschalten; die genannten Uhrinitialisierungsschaltungen der genannten mindestens zwei Uhren so ausgestaltet sind, um die mit diesen verbundenen Zähler so einzustellen, daß zwischen Initialisierungen der genannten Uhrzeiten modifiziert werden, so daß sie zumindest periodisch im wesentlichen miteinander identisch sind.

19. Das Uhrsynchronisierungssystem nach Anspruch 18, bei welchem die genannten Uhrinkrementationsschaltungen der genannten wenigstens zwei Uhren die genannten Uhrzeitsignale durch periodisches inkrementales Ändern des genannten Uhrzeitsignals modifizieren, das von den mit diesen verbundenen Zählern erhalten wird.

20. Ein Uhrsynchronisierungssystem zum Synchronisieren von wenigstens einer Uhr mit der Zeit, die von einer Referenzuhr erhalten wird, die ein Referenzzeitsignal überträgt, wobei die genannte wenigstens eine Uhr aufweist:
a. einen sequentiell fortschaltbaren Zähler zum Erhalten eines Signals bezüglich einer verstrichenen Zeit in Reaktion auf ein Taktgebersignal;
b. eine Zeitzählersteuereinheit, welche aufweist: einen Uhrzeitprozessor, der mit dem genannten Zähler zum Empfangen des genannten Signals bezüglich der verstrichenen Zeit verbunden ist, um ein Uhrzeitsignal auf der Grundlage des genannten Signals bezüglich der verstrichenen Zeit und einen Zähler-Offsetwert zu erzeugen, wobei der genannte Zähler-Offsetwert durch den genannten Uhrzeitprozessor gespeichert wird; eine Zählerfortschaltschaltung, die mit dem genannten Zähler verbunden ist, um für diesen das genannte Taktgebersignal zu erzeugen, wobei die genannte Zählerfortschaltschaltung das genannte Taktgebersignal mit einer variablen Geschwindigkeit erzeugt; und eine Uhrsynchronisierungsschaltung, die verbunden ist, um einen Zeitdifferenzfaktor zu empfangen, und
die mit dem genannten Uhrzeitprozessor der genannten Zählerfortschaltschaltung verbunden ist, so daß, wenn der genannte Zeitdifferenzfaktor empfangen wird, die genannte Uhrsynchronisierungsschaltung den genannten Zähler-Offsetwert selektiv aktualisiert und die genannte Geschwindigkeit selektiv einstellt, bei welcher die genannte Zählerfortschaltschaltung das genannte Zählerfortschaltsignal erzeugt; und
c. eine Differenzrechenschaltung, die eine erste Empfangsschaltung zum Empfangen des Referenzzeitsignals und eine zweite Empfangsschaltung zum Empfangen des genannten Zähleruhrzeitsignals aufweist, und eine Differenzverarbeitungsschaltung, um eine Differenz zwischen dem Referenzzeitsignal und dem genannten Uhrzeitsignal als den genannten Zeitdifferenzfaktor zu errechnen und um den genannten Zeitdifferenzfaktor zu der genannten Uhrsynchronisierungsschaltung zu übertragen.

21. Das Uhrsynchronisierungssystem nach Anspruch 20, bei welchem die genannte Zeitzählersteuereinheit eine Zentralverarbeitungseinheit aufweist und wobei die genannte Zentralverarbeitungseinheit den genannten Uhrzeitprozessor und die genannte Uhrsynchronisierungsschaltung aufweist.

22. Das Uhrsynchronisierungssystem nach Anspruch 21, bei welchem die erste Empfangsschaltung der genannten Differenzrechenschaltung mit der genannten Zentralverarbeitungseinheit zum Liefern des Referenzzeitsignals zu dieser verbunden ist; und bei welchem die genannte Zentralverarbeitungseinheit den Zeitdifferenzfaktor zwischen dem genannten Referenzzeitsignal und der genannten Uhrzeit errechnet.

23. Das Uhrsynchronisierungssystem nach Anspruch 21, bei welchem:
die genannte Differenzrechenschaltung ein Teil eines von der genannten Zeitzählersteuereinheit fernen Erhaltungsoperationspunkts ist und bei welchem der genannte Erhaltungsoperationspunkt aufweist; einen ersten Empfänger zum periodischen Empfangen des Referenzzeitsignals von der Referenzuhr; eine Erhaltungsoperationsuhr, die mit dem genannten ersten Empfänger zum Erhalten des Referenzzeitsignals verbunden ist; einen zweiten Empfänger zum Empfangen der genannten Zähleruhrzeit; und eine Zeitdifferenzrechenschaltung, die mit der genannten Erhaltungsoperationspunkt-Uhr zum Empfangen des Referenzzeitsignals und mit dem genannten zweiten Empfänger zum Empfangen der genannten Zähleruhrzeit verbunden ist, um den genannten Zeitdifferenzfaktor zwischen dem Referenzzeitsignal und der genannten Zähleruhrzeit zu errechnen und um ein Differenzsignal, das für den genannten Differenzzeitfaktor kennzeichnend ist, zu der genannten Uhrsynchronisierungsschaltung zu liefern; und bei welchem
die genannte Zeitzählersteuereinheit einen Empfänger zum Empfangen des genannten Differenzsignals von dem genannten Erhaltungsoperationspunkt aufweist, wobei der genannte Empfänger mit der genannten Zentralverarbeitungseinheit zum Liefern der genannten Differenzsignale zu dieser als der genannte Zeitdifferenzfaktor verbunden ist.

24. Ein Uhrsynchronisierungssystem das in Bezug auf eine Referenzzeituhr arbeitet, welche ein Referenzzeitsignal überträgt, aufweisend:
a. eine Mehrzahl von Uhren, von denen jede Uhr aufweist:
einen sequentiell fortschaltbaren Zähler zum Erhalten einer verstrichenen Zeit in Reaktion auf ein Taktgebersignal;
eine Zeitzählersteuereinheit, welche aufweist: einen Uhrzeitprozessor, der mit dem genannten Zähler zum Empfangen des Werts der genannten verstrichenen Zeit verbunden ist, um ein Uhrzeitsignal auf der Grundlage des genannten Werts der verstrichenen Zeit und auf der Grundlage eines Zähler-Offsetwerts zu erzeugen, wobei der genannte Zähler-Offsetwert durch den genannten Uhrzeitprozessor gespeichert ist; eine Zählerfortschaltschaltung, die mit dem genannten Zähler zum Erzeugen des genannten Taktgebersignals für diesen verbunden ist, wobei die genannte Zählerfortschaltschaltung das genannte Taktgebersignal mit einer variablen Geschwindigkeit erzeugt: und eine Uhrsynchronisierungsschaltung, die verbunden ist, um einen Zeitdifferenzfaktor zu empfangen, und die mit dem genannten Uhrzeitprozessor und der genannten Zählerfortschaltschaltung verbunden ist, so daß, wenn der genannte Zeitdifferenzfaktor empfangen wird, die genannte Uhrsynchronisierungsschaltung den genannten Zähler-Offsetwert selektiv aktualisiert und die genannte Geschwindigkeit selektiv einstellt, bei welcher die genannte Zählerfortschaltschaltung das genannte Zählerfortschaltsignal erzeugt;
b. wobei eine erste der genannten Uhren weiterhin einen Referenzzeitempfänger zum Empfangen des Referenzzeitsignals von der Referenzuhr aufweist, wobei der Referenzzeitempfänger mit der genannten Uhrsynchronisierungsschaltung zum Liefern des Referenzzeitsignals zu dieser verbunden ist; wobei eine Verbindung zwischen dem genannten Uhrzeitprozessor der genannten ersten der genannten Uhren und der Uhrsynchronisierungsschaltung zum Zuführen des genannten Uhrzeitsignals zu der genannten Uhrsynchronisierungsschaltung vorgesehen ist; und wobei die genannte Uhrsynchronisierungsschaltung der genannten ersten der genannten Uhren den genannten Zeitdifferenzfaktor zwischen dem genannten Referenzzeitsignal und dem genannten Uhrzeitsignal errechnet;
c. einen von einer zweiten der genannten Uhren fernen Erhaltungsoperationspunkt, welcher aufweist: einen ersten Empfänger zum Empfangen des Referenzzeitsignals von der Referenzuhr, eine Erhaltungsoperationsuhr, die mit dem genannten ersten Empfänger zum Erhalten des Referenzzeitsignals verbunden ist, einen zweiten Empfänger zum Empfangen des genannten Uhrzeitsignals von der genannten zweiten der genannten Uhren und eine Zeitdifferenzrechenschaltung, die mit der genannten Erhaltungsoperationspunkt-Uhr zum Empfangen des Referenzzeitsignals und mit dem genannten zweiten Empfänger zum Empfangen des genannten Uhrzeitsignals verbunden ist, um den genannten Zeitdifferenzfaktor zwischen dem Referenzzeitsignal und dem genannten Uhrzeitsignal zu errechnen und um ein Differenzsignal, das für den genannten Zeitdifferenzfaktor kennzeichnend ist, zu der genannten zweiten der genannten Uhren zu liefern; und
d. eine Empfangseinheit bei der genannten zweiten der genannten Uhren zum Empfangen des genannten Differenzsignals, wobei die Empfangseinheit mit der genannten Uhrsynchronisierungsschaltung zum Zuführen des genannten Zeitdifferenzfaktors zu dieser verbunden ist.

25. Das Uhrsynchronisierungssystem nach Anspruch 24, bei welchem:
wenigstens zwei der genannten Uhren mit Uhrsynchronisierungsschaltungen versehen sind, die so ausgestaltet sind, daß sie die mit diesen verbundenen Zählerfortschaltschaltungen dazu veranlassen, Taktgebersignale zu erzeugen, die voneinander verschieden sind, um so zu verursachen, daß die genannten Zähler mit verschiedenen Geschwindigkeiten fortschalten; und die genannten Uhrsynchronisierungsschaltungen der genannten wenigstens zwei Uhren so ausgestaltet sind, um die genannten, mit diesen verbundenen Zähler-Offsetwerte zu aktualisieren, so daß dazwischen, wenn die genannten Zeitdifferenzfaktoren empfangen werden, die genannten Uhrzeitprozessoren Uhrzeiten erzeugen werden, welche im wesentlichen identisch miteinander sind.

26. Das Uhrsynchronisierungssystem nach Anspruch 25, bei welchem die genannten Uhrsynchronisierungsschaltungen der genannten wenigstens zwei Uhren die genannten Zähler-Offsetwerte durch periodisches inkrementales Ändern der genannten Zähler-Offsetwerte aktualisieren.

27. Ein Uhrnetzwerk zum Liefern von Zeitsignalen und Referenzsignalen, aufweisend:
eine Mehrzahl von Uhren, wobei jede Uhr aufweist: einen sequentiell fortschaltbaren Zähler zum Erhalten eines Zeitwerts in Reaktion auf ein Referenzsignal;
einen Signalgenerator zum Erzeugen des genannten Referenzsignals zum Aufbringen auf den genannten, mit diesem Signalgenerator verbundenen Zähler, wobei wenigstens zwei Signalgeneratoren so ausgestaltet sind, um die genannten Referenzsignale unterschiedlich zu erzeugen, so daß die mit diesen Signalgeneratoren verbundenen Zähler mit unterschiedlichen Geschwindigkeiten fortschalten werden;
eine Zeitwertverarbeitungsschaltung, die mit dem genannten Zähler zum Erzeugen eines Zeitsignals auf der Grundlage des genannten Zeitwertes verbunden ist, wobei die genannten Uhrzeitwertverarbeitungsschaltungen, die mit den genannten wenigstens zwei Signalgeneratoren verbunden sind, so ausgestaltet sind, um auf der Grundlage der genannten verschiedenen Zeitwerte Uhrzeiten zu erzeugen, die im wesentlichen miteinander identisch sind.

28. Das Uhrnetzwerk nach Anspruch 27, bei welchem die genannten Zähler Uhrzeiten erhalten, gemäß denen die genannten Zeltsignale erzeugt werden, und die genannten Zeitwertverarbeitungsschaltungen die genannten Zähler periodisch erhöhen, so daß die genannten Uhrzeiten periodisch im wesentlichen identisch miteinander sind.

29. Das Uhrnetzwerk nach Anspruch 28, bei welchem die genannten Referenzsignale variable Frequenzsignale sind und die genannten Signalgeneratoren die genannten Referenzsignale bei verschiedenen Frequenzen erzeugen.

30. Das Uhrnetzwerk nach Anspruch 27, bei welchem: die genannten Zähler Zählungen bezüglich verstrichener Zeit erhalten; die genannten Zeitwertverarbeitungsschaltungen separate Zähler-Offsetwerte zum Kombinieren mit den genannten Zählungen bezüglich verstrichener Zeit erhalten, um Zeitsignale zu erzeugen; und die genannten Zeitwertverarbeitungsschaltungen die genannten Zähler-Offsetwerte periodisch inkremental ändern, so daß die genannten Zeitsignale periodisch im wesentlichen identisch miteinander sind.

31. Das Uhrnetzwerk nach Anspruch 30, bei welchem die genannten Referenzsignale variable Frequenzsignale sind und die genannten Signalgeneratoren die genannten Referenzsignale bei verschiedenen Frequenzen erzeugen.

32. Ein Rundfunknetz, aufweisend:
eine Mehrzahl von Radiosendern zum Übertragen von Radiosignalen auf einer Trägerfrequenz, wobei jeder genannte Sender eine Trägerfrequenzregelschaltung zum Bilden der genannten Trägerfrequenz des genannten Senders aufweist und wobei die genannte Trägerfrequenzregelschaltung die genannte Trägerfrequenz auf der Grundlage eines Referenzsignals bildet;
eine Mehrzahl von Uhrschaltungen, wobei jede genannte Uhrschaltung mit einem entsprechenden der genannten Mehrzahl der Radiosender verbunden ist, wobei jede genannte Uhrschaltung aufweist:
einen sequentiell fortschaltbaren Zähler zum Erhalten eines Zeitwertes in Reaktion auf das genannte Referenzsignal;
einen Signalgenerator zum Erzeugen des genannten Referenzsignals zum Aufbringen auf die genannte Trägerfrequenzregeleinheit und den mit diesem verbundenen Zähler, wobei wenigstens zwei Uhrsignalgeneratoren so ausgestaltet sind, um die genannten Referenzsignale unterschiedlich zu erzeugen, so daß die mit diesen Uhrsignalgeneratoren verbundenen Sender auf unterschiedlichen Trägerfrequenzen senden werden und die genannten, mit diesen Uhrsignalgeneratoren verbundenen Zähler mit unterschiedlichen Geschwindigkeiten fortschalten werden, um so zu verursachen, daß die genannten Zähler verschiedene Zeitwerte erhalten;
eine Zeitwertverarbeitungsschaltung, die mit dem genannten Zähler zum Erzeugen einer Uhrzeit auf der Grundlage des genannten Zeitwertes verbunden ist, wobei die genannten Uhrzeitwertverarbeitungsschaltungen, die mit den genannten wenigstens zwei Signalgeneratoren verbunden sind, so ausgestaltet sind, um auf der Grundlage der genannten verschiedenen Zeitwerte Uhrzeiten zu erzeugen, die im wesentlichen identisch miteinander sind.

33. Das Rundfunknetz nach Anspruch 32, bei welchem die genannten Zähler Uhrzeiten erhalten, gemäß denen die genannten Zeitsignale erzeugt werden, und die genannten Zeitwertverarbeitungsschaltungen die genannten Zähler periodisch erhöhen, so daß die genannten Uhrzeiten periodisch im wesentlichen identisch miteinander sind.

34. Das Rundfunknetz nach Anspruch 33, bei welchem die genannten Referenzsignale variable Frequenzsignale sind und die genannten Signalgeneratoren die genannten Referenzsignale bei verschiedenen Frequenzen erzeugen.

35. Das Rundfunknetz nach Anspruch 32, bei welchem: die genannten Zähler Zählungen bezüglich verstrichener Zeit erhalten; die genannten Zeitwertverarbeitungsschaltungen separate Zähler-Offsetwerte zum Kombinieren mit den genannten Zählungen bezüglich verstrichener Zeit erhalten, um Zeitsignale zu erzeugen; und die genannten Zeitwertverarbeitungsschaltungen die genannten Zähler-Offsetwerte periodisch inkremental ändern, so daß die genannten Zeitsignale periodisch im wesentlichen identisch miteinander sind.

36. Das Rundfunknetz nach Anspruch 35, bei welchem die genannten Referenzsignale variable Frequenzsignale sind und die genannten Signalgeneratoren die genannten Referenzsignale bei verschiedenen Frequenzen erzeugen.

## Revendications

1. Horloge, qui peut être synchronisée sur le temps conservé par une horloge de référence, qui émet un signal de temps de référence, ladite horloge comprenant :
a. un compteur que l'on peut faire avancer séquentiellement et qui sert à conserver un signal de temps d'horloge en réponse à un signal de cadencement d'horloge ;
b. un dispositif de commande de compteur de temps comportant un circuit d'initialisation connecté audit compteur pour établir un état initial de l'horloge, un circuit d'avance du compteur connecté audit compteur pour lui envoyer ledit signal d'horloge, et un circuit de synchronisation de l'horloge connecté de manière à recevoir un facteur de différence de temps et connecté audit circuit d'initialisation et audit circuit d'avance du compteur, de sorte que, lorsque ledit facteur de différence de temps est reçu, ledit circuit de synchronisation de l'horloge commande de façon sélective ledit circuit d'initialisation pour établir un nouvel état initial de l'horloge, et ledit circuit d'avance du compteur pour modifier ledit signal d'horloge ; et
c. un circuit de calcul de différence comprenant un premier circuit de réception pour recevoir le signal de temps de référence et un second circuit de réception pour recevoir ledit signal de temps d'horloge, et un circuit de traitement de différence pour calculer une différence entre le signal de temps de référence et ledit signal de temps d'horloge, sous la forme dudit facteur de différence de temps et pour envoyer ledit facteur de différence de temps audit circuit de synchronisation de l'horloge.

2. Horloge selon la revendication 1, dans laquelle ledit premier circuit de réception du circuit de calcul de différence est connecté audit circuit de synchronisation de l'horloge pour lui envoyer le signal de temps de référence ; ledit second circuit de réception du circuit de calcul de différence comprend une liaison entre ledit compteur et ledit circuit de synchronisation de l'horloge, par l'intermédiaire de laquelle ledit signal de temps d'horloge est appliqué audit circuit de synchronisation de l'horloge ; et dans lequel le circuit de synchronisation de l'horloge calcule ledit facteur de différence de temps entre ledit signal de temps de référence et ledit signal de temps d'horloge.

3. Horloge selon la revendication 2, dans laquelle ledit circuit de synchronisation d'horloge est un microprocesseur.

4. Horloge selon la revendication 2, dans laquelle ledit premier circuit de réception du circuit de calcul de différence est un récepteur du temps de référence configuré de manière à recevoir le signal de temps de référence et connecté audit circuit de synchronisation d'horloge pour envoyer à ce dernier le signal de temps de référence.

5. Horloge selon la revendication 4, dans laquelle le signal de temps de référence est reçu d'un satellite et dans lequel ledit récepteur de temps de référence est adapté pour recevoir le signal de temps de référence en provenance du satellite.

6. Horloge selon la revendication 4, dans laquelle ledit second circuit de réception dudit circuit de calcul de différence comporte en outre un registre connecté entre ledit compteur et ledit circuit de synchronisation, ledit registre verrouillant ledit signal de temps d'horloge lors de la réception d'un signal impulsionnel de cadencement, et ledit circuit de synchronisation de l'horloge calcule ledit facteur de différence de temps à partir dudit signal de temps d'horloge verrouillé ; et
dans lequel ledit récepteur du temps de référence est connecté audit registre pour envoyer à ce dernier ledit signal impulsionnel de cadencement, et dans lequel ledit signal impulsionnel de cadencement est produit lorsque ledit premier récepteur du temps de référence reçoit le signal de temps de référence.

7. Horloge selon la revendication 4, dans laquelle ledit circuit de synchronisation d'horloge est un microprocesseur.

8. Horloge selon la revendication 2, dans laquelle ledit circuit d'avance du compteur inclut un oscillateur commandé par tension, qui produit un signal de sortie à fréquence variable de manière à produire un signal d'horloge à fréquence variable, et dans lequel ledit circuit de synchronisation d'horloge applique une tension de commande audit oscillateur commandé par la tension pour établir ledit signal d'horloge.

9. Horloge selon la revendication 7, dans laquelle ledit signal de sortie de l'oscillateur commandé par tension se situe à une fréquence supérieure à la fréquence dudit signal d'horloge, et dans lequel ledit circuit d'avance du compteur comprend un diviseur servant à recevoir ledit signal de sortie de l'oscillateur commandé par la tension et produire, à partir de là, ledit signal de temps d'horloge.

10. Horloge selon la revendication 9, dans laquelle le premier circuit de réception du circuit de calcul de différence est un récepteur du temps de référence configuré de manière à recevoir le signal de temps de référence et est connecté audit circuit de synchronisation d'horloge pour envoyer à ce dernier le signal de temps de référence.

11. Horloge selon la revendication 10, dans laquelle ledit second circuit de réception du circuit de calcul de différence comporte en outre un registre branché entre ledit compteur et ledit circuit de synchronisation de l'horloge, ledit registre verrouillant ledit signal de temps d'horloge lors de la réception d'un signal impulsionnel de cadencement et ledit circuit de synchronisation calculant ledit facteur de différence de temps à partir dudit signal du temps d'horloge verrouillé ; et dans lequel ledit récepteur du temps de référence est connecté audit registre pour envoyer à ce dernier ledit signal impulsionnel de cadencement, et dans lequel ledit signal impulsionnel de cadencement est produit lorsque ledit récepteur du temps de référence reçoit le signal de temps de référence.

12. Horloge selon la revendication 1, dans laquelle :
ledit circuit de calcul de différence fait partie d'un point d'exécution de maintenance qui est situé sur le côté distal par rapport audit dispositif de commande du compteur de temps, et dans lequel ledit point d'exécution de maintenance comprend : un premier récepteur pour recevoir périodiquement le signal de temps de référence à partir de l'horloge de référence ; une horloge d'exécution de maintenance reliée audit premier récepteur pour maintenir le signal de temps de référence ; un second récepteur pour recevoir ledit signal de temps d'horloge ; et un circuit de calcul de différence de temps connecté à ladite horloge du point d'exécution de maintenance pour recevoir le signal de temps d'horloge et audit second récepteur pour recevoir ledit signal de temps d'horloge pour calculer ledit facteur de différence de temps entre le signal de temps de référence et ledit signal de temps d'horloge et transmettre un signal de différence indicatif dudit facteur de différence de temps audit circuit de synchronisation de l'horloge ; et dans lequel ledit circuit de synchronisation de l'horloge inclut un récepteur pour recevoir ledit signal de référence à partir dudit point d'exécution d'horloge.

13. Système de synchronisation d'horloges, qui fonctionne en rapport avec une horloge fournissant le temps de référence qui émet un signal de temps de référence, comprenant:
a. une pluralité d'horloges, chacune desdites horloges comprenant : un compteur que l'on peut faire avancer séquentiellement et qui sert à maintenir un signal de temps d'horloge en réponse à un signal de cadencement d'horloge ;
un dispositif de commande de compteur de temps comportant un circuit d'initialisation connecté audit compteur pour établir un état initial de l'horloge ; un circuit d'avance du compteur connecté audit compteur pour lui envoyer ledit signal d'horloge ; et un circuit de synchronisation de l'horloge connecté de manière à recevoir un facteur de différence de temps, et connecté audit circuit d'initialisation et audit circuit d'avance du compteur, de sorte que, lorsque ledit facteur de différence de temps est reçu, ledit circuit de synchronisation de l'horloge commande de façon sélective ledit circuit d'initialisation pour établir un nouvel état initial de l'horloge, et ledit circuit d'avance du compteur pour modifier ledit signal d'avance du compteur;
b. dans lequel une première desdites horloges comporte en outre un récepteur du temps de référence servant à recevoir le signal de temps de référence à partir de l'horloge de référence et connecté audit circuit de synchronisation d'horloges pour envoyer à ce circuit le signal de temps de référence ; une liaison entre ledit compteur de ladite première desdites horloges et ledit circuit de synchronisation d'horloges pour envoyer ledit signal de temps d'horloge audit circuit de synchronisation d'horloges ; et dans lequel ledit circuit de synchronisation de ladite première desdites horloges calcule ledit facteur de différence de temps entre ledit signal de temps de référence et ledit signal de temps d'horloge ;
c. un point d'exécution de maintenance situé dans une position distale par rapport à une seconde desdites horloges, comprenant un premier récepteur pour recevoir le signal de temps de référence à partir de l'horloge de référence, une horloge d'exécution de maintenance connectée audit premier récepteur pour maintenir le signal de temps de référence, un second récepteur pour recevoir ledit signal d'horloge de ladite seconde desdites horloges, et un circuit de calcul de différence de temps connecté à ladite horloge du point d'exécution de maintenance pour recevoir le signal de temps de référence et audit second récepteur pour recevoir ledit signal de temps d'horloge pour le calcul dudit facteur de différence de temps entre le signal de temps de référence et ledit signal de temps d'horloge et envoyer un signal de différence indicatif dudit facteur de différence de temps à ladite seconde desdites horloges ; et
d. une unité de réception située dans ladite seconde desdites horloges pour recevoir ledit signal de différence et connectée audit circuit de synchronisation d'horloges pour envoyer à ce circuit ledit facteur de différence de temps.

14. Système de synchronisation d'horloges selon la revendication 13, dans lequel le signal de temps de référence est reçu de la part d'un satellite et dans lequel lesdits récepteurs du temps de référence sont adaptés pour recevoir le signal de temps de référence depuis le satellite.

15. Système de synchronisation d'horloges selon la revendication 13, dans lequel : ladite première desdites horloges comprend en outre un registre connecté entre ledit compteur et ledit circuit de synchronisation d'horloge, ledit registre verrouillant ledit signal de temps d'horloge lors de la réception d'un signal impulsionnel de cadencement ; et ledit circuit de synchronisation d'horloge calcule ledit facteur de différence de temps à partir dudit signal de temps d'horloge verrouillé ; et ledit récepteur du temps de référence est connecté audit registre pour envoyer à ce dernier ledit signal impulsionnel de cadencement, et dans lequel ledit signal impulsionnel de cadencement est produit lorsque ledit récepteur du temps de référence de ladite première desdites horloges reçoit le signal de temps de référence.

16. Système de synchronisation d'horloges selon la revendication 13, dans lequel lesdits circuits d'avance du compteur comprennent chacun un oscillateur commandé par la tension, qui produit un signal de sortie à fréquence variable pour produire un signal d'horloge à fréquence variable, et dans lequel chacun desdits circuits de synchronisation d'horloges applique une tension de commande audit oscillateur commandé par tension, de manière à établir lesdits signaux de cadencement d'horloge.

17. Système de synchronisation d'horloges selon la revendication 16, dans lequel lesdits signaux de sortie de l'oscillateur commandé par tension ont des fréquences supérieures aux fréquences desdits signaux de cadencement d'horloge, et dans lequel chacun desdits circuits d'avance de compteurs comprend un diviseur pour recevoir ledit signal de sortie de l'oscillateur commandé par tension et produire à partir de là ledit signal de cadencement d'horloge.

18. Système de synchronisation d'horloges selon la revendication 13, dans lequel : lesdits circuits de synchronisation d'horloge d'au moins deux desdites horloges sont configurés de manière à amener lesdits circuits d'avance de compteurs, qui leur sont associés, à produire des signaux d'horloge qui sont différents l'un de l'autre de manière à amener lesdits compteurs à avancer à des cadences différentes ; lesdits circuits d'initialisation desdites au moins deux horloges étant configurés de manière à régler lesdits compteurs qui leur sont associés, de sorte qu'entre des initialisations de ladite horloge, des temps sont modifiés de manière à être, au moins périodiquement, essentiellement identiques entre eux.

19. Système de synchronisation d'horloges selon la revendication 18, dans lequel lesdits circuits d'incrémentation desdites au moins deux horloges modifient lesdits signaux de temps d'horloge au moyen d'une modification incrémentale périodique dudit signal de temps d'horloge maintenu par lesdits compteurs, qui leur sont associés.

20. Système de synchronisation d'horloge pour synchroniser au moins une horloge sur le temps maintenu par une horloge de référence qui transmet un signal de temps de référence, et dans lequel ladite au moins une horloge comprend :
a. un compteur que l'on peut faire avancer séquentiellement et qui sert à maintenir un signal de temps d'horloge en réponse à un signal d'horloge ;
b. un dispositif de commande de compteur de minuterie, comprenant : un processeur de temps d'horloge connecté audit compteur pour recevoir ledit signal de temps écoulé pour produire un signal de temps d'horloge sur la base dudit temps écoulé, et une valeur de décalage du compteur, ladite valeur de décalage du compteur étant mémorisée par ledit processeur de temps d'horloge ; un circuit d'avance du compteur connecté audit compteur pour envoyer à ce dernier ledit signal d'horloge, ledit circuit d'avance du compteur produisant ledit signal d'horloge à une cadence variable ; et un circuit de synchronisation d'horloges connecté de manière à recevoir un facteur de différence de temps, et
connecté audit processeur de temps d'horloge et audit circuit d'avance du compteur, de sorte que, lorsque ledit facteur de différence de temps est reçu, ledit circuit de synchronisation d'horloge met à jour sélectivement ladite valeur de décalage du compteur et règle sélectivement ladite cadence à laquelle ledit circuit d'avance du compteur produit ledit signal d'avance du compteur; et
c. un circuit de calcul de différence comprenant un premier circuit de réception pour recevoir le signal de temps de référence et un second circuit de réception pour recevoir ledit signal de temps d'horloge du compteur, et un circuit de traitement de différence pour calculer une différence entre le signal de temps de référence et ledit signal de temps d'horloge, sous la forme dudit facteur de différence de temps et pour envoyer ledit facteur de différence de temps audit circuit de synchronisation de l'horloge.

21. Système de synchronisation d'horloge selon la revendication 20, dans lequel ledit dispositif de commande de compteur de temps comprend une unité centrale de traitement et ladite unité centrale de traitement comprend ledit processeur de temps d'horloge et ledit circuit de synchronisation d'horloge.

22. Système de synchronisation d'horloge selon la revendication 21, dans lequel ledit premier circuit de réception du circuit de calcul de différence est connecté à ladite unité centrale de traitement pour l'envoi du signal de temps de référence à cette dernière; et ladite unité centrale de traitement calcule ledit facteur de différence de temps entre ledit signal de temps de référence et ledit temps d'horloge.

23. Système de synchronisation d'horloge selon la revendication 21, dans lequel :
ledit circuit de calcul de différence fait partie d'un point d'exécution de maintenance situé dans une position distale par rapport audit dispositif de commande du compteur de temps, et dans ledit point d'exécution de maintenance comprend : un premier récepteur pour recevoir périodiquement le signal de temps de référence en provenance de l'horloge de référence ; une horloge d'exécution de maintenance connectée audit premier récepteur pour maintenir le signal de temps de référence ; un second récepteur pour recevoir ledit temps d'horloge du compteur ; et un circuit de calcul de différence de temps connecté à ladite horloge du point d'exécution de maintenance pour recevoir le signal de temps de référence et audit second récepteur pour recevoir ledit temps d'horloge de compteur pour calculer ledit facteur de différence de temps entre le signal de temps de référence et le temps d'horloge du compteur et envoyer un signal de différence indicatif dudit facteur de différence de temps audit circuit de synchronisation d'horloge ; et dans lequel
ledit dispositif de commande du compteur de temps inclut un récepteur pour recevoir ledit signal de référence depuis ledit point d'exécution de maintenance, ledit récepteur étant connecté à ladite unité centrale de traitement pour envoyer à cette dernière lesdits signaux de différence en tant que ledit facteur de différence de temps.

24. Système de synchronisation d'horloges, qui fonctionne en rapport avec une horloge de temps de référence qui transmet un signal de temps de référence, comprenant :
a. une pluralité d'horloges, dont chacune comprend :
un compteur qu'on peut faire avancer séquentiellement et qui sert à conserver un intervalle de temps écoulé en réponse à un signal d'horloge ;
un dispositif de commande de compteur de temps comprenant : un processeur de temps d'horloge connecté audit compteur pour recevoir la valeur dudit intervalle de temps écoulé pour produire un signal de temps d'horloge sur la base de ladite valeur de l'intervalle de temps écoulé et d'une valeur de décalage de compteur, ladite valeur de décalage de compteur étant mémorisée par ledit processeur de temps d'horloge ; un circuit d'avance du compteur connecté audit compteur pour envoyer à ce dernier ledit signal de cadencement d'horloge, ledit circuit d'avance de compteur produisant ledit signal de cadencement d'horloge à une cadence variable ; et un circuit de synchronisation d'horloge connecté de manière à recevoir un facteur de différence de temps, et connecté audit processeur de temps d'horloge et audit circuit d'avance du compteur, ce qui a pour effet que, lorsque ledit facteur de différence de temps est reçu, ledit circuit de synchronisation d'horloge met à jour sélectivement ladite valeur de décalage du compteur et règle sélectivement ladite cadence à laquelle ledit circuit d'avance du compteur produire ledit signal d'avance du compteur ;
b. dans lequel une première desdites horloges comprend en outre un récepteur du temps de référence pour recevoir le signal de temps de référence provenant de l'horloge de référence et connecté audit circuit de synchronisation d'horloge pour envoyer à ce circuit le signal de temps de référence ; une liaison entre ledit processeur de temps d'horloge de ladite première desdites horloges et ledit circuit de synchronisation d'horloges pour envoyer ledit signal de temps d'horloge audit circuit de synchronisation d'horloge ; et dans lequel ledit circuit de synchronisation de ladite première desdites horloges calcule ledit facteur de différence de temps entre ledit signal de temps de référence et ledit signal de temps d'horloge ;
c. un point d'exécution de maintenance qui est situé sur le côté distal par rapport à une seconde desdites horloges, comprenant un premier récepteur pour recevoir un signal de temps de référence à partir de l'horloge de référence, une horloge d'exécution de maintenance connectée audit premier récepteur pour maintenir le signal de temps de référence, un second récepteur pour recevoir ledit signal de temps d'horloge à partir de ladite seconde desdites horloges, et un circuit de calcul de la différence de temps, connecté à ladite horloge du point d'exécution de maintenance pour recevoir le signal de temps de référence et audit second récepteur pour recevoir ledit signal de temps d'horloge pour le calcul dudit facteur de différence de temps entre le signal de temps de référence et ledit signal de temps d'horloge et envoyer un signal de différence indicatif dudit facteur de différence de temps à ladite seconde desdites horloges ; et
d. une unité de réception située dans ladite seconde desdites horloges pour recevoir ledit signal de référence et connectée audit circuit de synchronisation d'horloges pour envoyer à ce dernier ledit facteur de différence de temps.

25. Système de synchronisation d'horloges selon la revendication 24, dans lequel :
au moins deux desdites horloges sont équipées de circuits de synchronisation d'horloge qui sont configurés de manière à amener lesdits circuits d'avance de compteurs, qui leur sont associés, à produire des signaux d'horloge qui différent les uns des autres pour amener lesdits compteurs à avancer à des cadences différentes ; et lesdits moyens de synchronisation desdites au moins deux horloges sont configurés de manière à mettre à jour lesdites valeurs de décalage des compteurs, qui leur sont associées, de sorte que pendant l'intervalle entre lesquels lesdits facteurs de différence de temps sont reçus, lesdits processeurs de temps d'horloge produisent des temps d'horloge qui sont sensiblement identiques entre eux.

26. Système de synchronisation d'horloges selon la revendication 25, dans lequel lesdits circuits de synchronisation d'horloges desdites au moins deux horloges mettent à jour lesdites valeurs de décalage des compteurs par incrémentation périodique desdites valeurs de décalage des compteurs.

27. Réseau d'horloges servant à délivrer des signaux de temps et des signaux de référence comprenant :
une pluralité d'horloges, chacune desdites horloges comprenant :
un compteur que l'on peut faire avancer séquentiellement et qui sert à maintenir une valeur de temps en réponse à un signal de référence ;
un générateur de signaux pour produire ledit signal de référence pour son application audit compteur, qui lui est associé, et dans lequel au moins deux générateurs de signaux sont configurés de manière à produire lesdits signaux de référence différents de sorte que lesdits compteurs, qui leur sont associés, avancent à des cadences différentes ;
un circuit de traitement de valeur de temps connecté audit compteur pour produire un signal de temps sur la base de ladite valeur de temps, lesdits circuits de traitement des valeurs de temps d'horloge, auxquels sont associés lesdits au moins deux générateurs de signaux, sont configurés de manière à produire des temps d'horloge basés sur lesdites valeurs de temps dissemblables, qui sont sensiblement identiques entre elles.

28. Réseau d'horloges selon la revendication 27, dans lequel lesdits compteurs maintiennent des temps d'horloge lors desquels lesdits signaux de temps sont produits et lesdits circuits de traitement des valeurs de temps incrémentent périodiquement lesdits compteurs de sorte que lesdits temps d'horloge sont périodiquement essentiellement identiques entre eux.

29. Réseau d'horloges selon la revendication 28, dans lequel lesdits signaux de référence sont des signaux à fréquence variable et lesdits générateurs de signaux produisent lesdits signaux de référence à des fréquences différentes.

30. Réseau d'horloges selon la revendication 29, dans laquelle : lesdits compteurs maintiennent des comptages d'événements de temps écoulés lesdits circuits de traitement des valeurs de temps maintiennent des valeurs de décalage des compteurs séparées pour les combiner auxdits compteurs d'intervalles de temps écoulés pour produire des signaux de temps ; et lesdits circuits de traitement de valeurs de temps modifient périodiquement et de façon incrémentale lesdites valeurs de décalage des compteurs de sorte que lesdits signaux de temps sont périodiquement essentiellement identiques entre eux.

31. Réseau d'horloges selon la revendication 30, dans lequel lesdits signaux de référence sont des signaux à fréquence variable et lesdits générateurs de signaux produisent lesdits signaux de référence à des fréquences différentes.

32. Réseau de diffusion comprenant :
une pluralité d'émetteurs radio pour réaliser la diffusion de signaux radio à une fréquence porteuse, chacun desdits émetteurs comprenant un circuit de commande de la fréquence porteuse pour établir ladite fréquence porteuse dudit émetteur, ledit circuit de commande de fréquence porteuse établissant ladite fréquence porteuse sur la base d'un signal de référence ;
une pluralité de circuits d'horloge, dont chacun est associé à l'un correspondant de ladite pluralité d'émetteurs radio, chacun desdits circuits d'horloge comprenant :
un compteur que l'on peut faire avancer séquentiellement et qui sert à maintenir une valeur de temps en réponse audit signal de référence ;
un générateur de signaux pour produire ledit signal de référence en vue de son application à ladite unité de commande de fréquence de porteuse et ledit compteur associé, et dans lequel, au moins deux générateurs de signaux d'horloge sont configurés de manière à produire lesdits signaux de référence différents de sorte que lesdits émetteurs, qui sont y associés, exécutent une diffusion à des fréquences porteuses différentes et lesdits compteurs, qui sont associés, avancent à des cadences différentes, ce qui amène lesdits compteurs à maintenir des valeurs de temps différentes ;
un circuit de traitement des valeurs de temps connecté audit compteur pour produire un temps d'horloge sur la base de ladite valeur de temps, les circuits de traitement de valeurs de temps d'horloges associés auxdits au moins deux générateurs de signaux étant configurés de manière à produire des temps d'horloge sur la base desdites valeurs de temps différentes, qui sont sensiblement identiques entre elles.

33. Réseau de diffusion selon la revendication 32, dans lequel lesdits compteurs maintiennent des temps d'horloge, lors desquels lesdits signaux de temps produits, et lesdits circuits de traitement des valeurs de temps incrémentent périodiquement lesdits compteurs de sorte que lesdits temps d'horloge sont périodiquement essentiellement identiques entre eux.

34. Réseau de diffusion selon la revendication 33, dans lequel lesdits signaux de référence sont des signaux à fréquence variable et lesdits générateurs de signaux produisent lesdits signaux de référence à des fréquences différentes.

35. Réseau de diffusion selon la revendication 32, dans lequel : lesdits compteurs maintiennent des valeurs comptées de temps écoulés ; lesdits circuits de traitement des valeurs de temps maintiennent des valeurs séparées de décalage des compteurs pour leur combinaison avec lesdits valeurs comptées de temps écoulés pour produire des signaux de temps ; et lesdits circuits de traitement des valeurs de temps modifient périodiquement, de façon incrémentale, lesdits valeurs de décalage des compteurs de sorte que lesdits signaux de temps sont périodiquement essentiellement identiques entre eux.

36. Réseau du diffusion selon la revendication 35, dans lequel lesdits signaux de référence sont des signaux à fréquence variable et lesdits générateurs de signaux produisent lesdits signaux de référence à différentes fréquence.
